(19) Europäisches Patentamt
European Patent Office
Office européen des brevets

(11) **EP 4 761 365 A1**

(12) **EUROPEAN PATENT APPLICATION**
published in accordance with Art. 153(4) EPC

(43) Date of publication:
**17.06.2026 Bulletin 2026/25**

(21) Application number: 24852324.3

(22) Date of filing: **07.08.2024**

(51) International Patent Classification (IPC):
*H04W 36/08* (2009.01)    *H04W 36/00* (2009.01)
*H04W 36/02* (2009.01)    *H04W 84/06* (2009.01)
*H04J 11/00* (2006.01)    *H04W 56/00* (2009.01)

(52) Cooperative Patent Classification (CPC):
**H04W 36/0072; H04W 36/0061; H04W 36/083**

(86) International application number:
**PCT/KR2024/011675**

(87) International publication number:
**WO 2025/033970 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:    09.08.2023   KR 20230104220
27.09.2023   KR 20230131085
31.07.2024   KR 20240101946

(71) Applicant: **Electronics and Telecommunications
Research Institute
Daejeon 34129 (KR)**

(72) Inventors:
• **CHO, Seung Kwon**
**Daejeon 34129 (KR)**
• **YUN, Mi Young**
**Daejeon 34129 (KR)**
• **LEE, Moon Sik**
**Daejeon 34129 (KR)**
• **LEE, Jun Hwan**
**Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR SATELLITE SWITCHING IN WIRELESS COMMUNICATION SYSTEM**

(57)    The present invention provides technology for satellite switching in a wireless communication system. A method performed by a terminal comprises the steps of: acquiring target satellite-related information from a source satellite; performing satellite switching from the source satellite to the target satellite on the basis of the target satellite-related information; and communicating with the target satellite on the basis of the target satellite-related information after performing the satellite switching.

○ : quasi–Earth–fixed cells
using the same PCI and SSB frequency

▯ : terminal

FIG. 13

**Description**

[Technical Field]

The present disclosure relates to a satellite switching technique in a wireless communication system, and more particularly, to a satellite switching technique in a wireless communication system, which allows satellites to be switched without changing a physical cell identifier (PCI).

[Background Art]

With the development of information and communication technology, various wireless communication technologies are being developed. Representative wireless communication technologies include long-term evolution (LTE) and new radio (NR) defined as the 3rd generation partnership project (3GPP) standards. The LTE may be one of the 4th generation (4G) wireless communication technologies, and the NR may be one of the 5th generation (5G) wireless communication technologies.

For the processing of rapidly increasing wireless data after commercialization of the 4G communication system (e.g., communication system supporting LTE), the 5G communication system (e.g., communication system supporting NR) using a frequency band (e.g., frequency band above 6 GHz) higher than a frequency band (e.g., frequency band below 6 GHz) of the 4G communication system as well as the frequency band of the 4G communication system is being considered. The 5G communication system can support enhanced Mobile BroadBand (eMBB), Ultra-Reliable and Low-Latency Communication (URLLC), and massive machine type communication (mMTC) scenarios.

Such wireless communication systems can be designed considering various scenarios, service requirements, potential system compatibility, and similar factors. In particular, active discussions are ongoing regarding both terrestrial network (TN)-based communication and non-terrestrial network (NTN)-based communication for the 5G NR system and beyond. It is anticipated that communication based on these foundations will be implemented.

The conventional wireless communication system (e.g. LTE) is a TN-based wireless communication system where both the base station (e.g. eNB, gNB, etc.) and the terminal (e.g. user equipment (UE)) are located on the ground. On the other hand, NTN refers to a network in which at least one of the base station or terminal is not situated on the ground. For example, TN-based communication may experience service disruptions in disaster and emergency situations such as fires, earthquakes, and tsunamis. Additionally, in suburban, rural, remote, isolated areas, and at sea, where demand density is low, there may be limitations in providing services due to high capital expenditures (CAPEX) and operational expenditures (OPEX) relative to operator revenue. The NTN can be a technology applied to overcome these limitations of TN. In such NTN-based systems, a technology that allows for satellite switching without changing a physical cell identifier (PCI) is required.

[Disclosure]

[Technical Problem]

The present disclosure aims to resolve the above problems by providing methods and apparatuses for satellite switching in a wireless communication system that allows for switching satellites without changing the PCI.

[Technical Solution]

A satellite switching method, according to a first exemplary embodiment of the present disclosure for achieving the above-described objective, may comprise, as a method of a terminal: obtaining target satellite-related information from a source satellite; performing satellite switching from the source satellite to a target satellite based on the target satellite-related information; and performing communication with the target satellite based on the target satellite-related information after performing the satellite switching.

The performing of communication with the target satellite may comprise: connecting to the target satellite without a random access procedure based on the target satellite-related information; and performing communication with the target satellite based on the target satellite-related information.

The source satellite and the target satellite may be connected to a same base station, the source satellite may form a first quasi-Earth-fixed cell and the target satellite may form a second quasi-Earth-fixed cell, a physical cell identifier (PCI) of the first quasi-Earth-fixed cell may be the same as a PCI of the second quasi-Earth-fixed cell, and a frequency of a first synchronization signal block (SSB) transmitted by the source satellite may be the same as a frequency of a second SSB transmitted by the target satellite.

The performing of communication with the target satellite may comprise: stopping a communication service with the source satellite based on the satellite switching; connecting to the target satellite based on the target satellite-related information; and performing communication with the target satellite through a service link of the target satellite based on the target satellite-related information.

The performing of communication with the target satellite may comprise: connecting to the target satellite based on the target satellite-related information; stopping communication on a service link of the source satellite after connecting to the target satellite; and performing communication with the target satellite through a service link of the target satellite based on the target satellite-related information.

The terminal may determine an uplink timing advance (TA) for the target satellite based on the target satellite-related information, and may apply the determined uplink TA to the communication with the target satellite.

The target satellite-related information may include at least one of an epoch time, uplink TA information, ephemeris information, uplink synchronization validity duration, cell-specific scheduling offset, network scheduling offset, TA report information, downlink polarization information, or uplink polarization information within non-terrestrial network configuration information for the target satellite.

The target satellite-related information may include a time at which provision of a communication service of the source satellite is stopped, when provision of the communication service is stopped at the time, the terminal may maintain an uplink hybrid automatic repeat request (HARQ) buffer without flushing the uplink HARQ buffer, and when the performing of communication with the target satellite starts, the terminal may resume an uplink HARQ operation with the target satellite.

The target satellite-related information may be included in a system information block (SIB) that the terminal obtains from the source satellite.

When the target satellite-related information is included in a non-terrestrial network-related SIB, the terminal may perform the satellite switching, and when the target satellite-related information is not included in the non-terrestrial network-related SIB, the terminal may not perform the satellite switching.

A satellite switching method, according to a second exemplary embodiment of the present disclosure for achieving the above-described objective, may comprise, as a method of a base station: providing target satellite-related information to a terminal via a source satellite connected to the base station; performing satellite switching from the source satellite to a target satellite at a time at which provision of a communication service of the source satellite is stopped; and providing a communication service to the terminal via the target satellite after performing the satellite switching, wherein the base station provides the communication service to the terminal via the target satellite without performing a random access procedure between the target satellite and the terminal.

The target satellite-related information may be included in a system information block (SIB) transmitted to the terminal.

The target satellite-related information may include at least one of an epoch time, uplink TA information, ephemeris information, uplink synchronization validity duration, cell-specific scheduling offset, network scheduling offset, TA report information, downlink polarization information, or uplink polarization information within non-terrestrial network configuration information for the target satellite.

The base station may include the target satellite-related information in a non-terrestrial network-related SIB to instruct the terminal to perform the satellite switching, and the base station may not include the target satellite-related information in the non-terrestrial network-related SIB to instruct the terminal not to perform the satellite switching.

A satellite switching apparatus, as a terminal, according to a third exemplary embodiment of the present disclosure for achieving the above-described objective, may comprise a processor, and the processor causes the terminal to perform: obtaining target satellite-related information from a source satellite; performing satellite switching from the source satellite to a target satellite based on the target satellite-related information; and performing communication with the target satellite based on the target satellite-related information after performing the satellite switching.

In the performing of communication with the target satellite, the processor may cause the terminal to perform: connecting to the target satellite without a random access procedure based on the target satellite-related information; and performing communication with the target satellite based on the target satellite-related information.

In the performing of communication with the target satellite, the processor causes the terminal to perform: stopping a communication service with the source satellite based on the satellite switching; connecting to the target satellite based on the target satellite-related information; and performing communication with the target satellite through a service link of the target satellite based on the target satellite-related information.

The target satellite-related information may include a time at which provision of a communication service of the source satellite is stopped, when provision of the communication service is stopped at the time, the processor may cause the terminal to maintain an uplink hybrid automatic repeat request (HARQ) buffer without flushing the uplink HARQ buffer, and when the performing of communication with the target satellite starts, the processor may cause the terminal to resumes an uplink HARQ operation with the target satellite.

The target satellite-related information may be included in a system information block (SIB) that the terminal obtains from the source satellite.

When the target satellite-related information is included in a non-terrestrial network-related SIB, the processor may cause the terminal to perform the satellite switching, and when the target satellite-related information is not included in the non-terrestrial network-related SIB, the processor may cause the terminal not to perform the satellite switching.

[Advantageous Effects]

According to the present disclosure, the terminal may not need to perform a separate random access procedure when performing satellite switching from a source satellite to a target satellite, thereby resolving the random access channel (RACH) congestion issue caused by the random access procedures. Furthermore, according to the present disclosure, even if the terminal does not perform a random access procedure immediately after satellite switching, the terminal can still perform uplink transmission to a base station if the terminal recognizes a pre-compensated timing advance (TA) related to the target satellite. Additionally, according to the present disclosure, the terminal may adjust the TA based on TA adjustment information received from the base station, enabling smooth communication via the target satellite.

[Description of Drawings]

FIG. 1 is a conceptual diagram illustrating an exemplary embodiment of a communication system.
FIG. 2 is a block diagram illustrating an exemplary embodiment of a communication node constituting a communication system.
FIG. 3 is a conceptual diagram illustrating exemplary embodiments of a radio interface protocol structure in a communication system.
FIG. 4 is a conceptual diagram illustrating an exemplary embodiment of time resources in which radio signals are transmitted in a communication system.
FIG. 5 is a conceptual diagram illustrating a time difference between a reception timing of an i-th downlink frame and a transmission timing of an i-th uplink frame in an exemplary embodiment of a communication system.
FIG. 6 is a conceptual diagram illustrating exemplary embodiments of a time/frequency resource grid of a communication system.
FIG. 7 is a conceptual diagram illustrating exemplary embodiments of a synchronization signal and physical broadcast channel (SS/PBCH) block or synchronization signal block (SSB) of a communication system.
FIG. 8 is a conceptual diagram illustrating a first exemplary embodiment of a non-terrestrial network.
FIG. 9 is a conceptual diagram illustrating a second exemplary embodiment of a non-terrestrial network.
FIG. 10 is a conceptual diagram illustrating exemplary embodiments of a satellite switching method in a quasi-Earth-fixed cell.
FIG. 11 is a conceptual diagram illustrating exemplary embodiments of a hard satellite switching method in a quasi-Earth-fixed cell.
FIG. 12 is a conceptual diagram illustrating exemplary embodiments of a soft satellite switching method in a quasi-Earth-fixed cell.
FIG. 13 is a conceptual diagram illustrating a first exemplary embodiment of an unchanged PCI satellite switching method.
FIG. 14 is a conceptual diagram illustrating a first exemplary embodiment of a reference point, common TA, and UE-specific TA.
FIG. 15 is a conceptual diagram illustrating SSBs and a beam sweeping operation in a wireless communication system.
FIG. 16 is a conceptual diagram illustrating a first exemplary embodiment of a method for indicating necessary system information using an indicator included in an SIB.
FIG. 17 is a conceptual diagram illustrating a second exemplary embodiment of a method for indicating necessary system information using an indicator included in an SIB.
FIG. 18 is a conceptual diagram illustrating a first exemplary embodiment of a method for independently providing system information needed immediately after switching within an SIB.
FIG. 19 is a conceptual diagram illustrating a first exemplary embodiment of a satellite switching time based on hard satellite switching.
FIG. 20 is a flowchart illustrating a first exemplary embodiment of a terminal operation in a satellite switching method in a wireless communication system.

[Modes of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may have the same meaning as a communication network.

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present specification, the base station may refer to an access point, radio access station, node B (NB), evolved node B (eNB), base transceiver station, mobile multihop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted

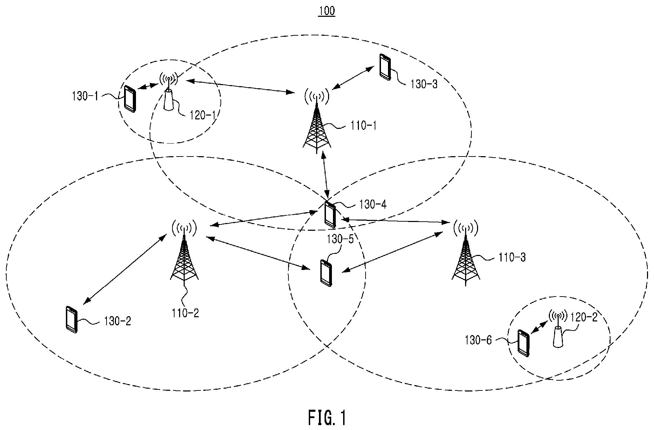

FIG. 1 is a conceptual diagram illustrating an exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. The plurality of communication nodes may support 4G communication (e.g. long term evolution (LTE), LTE-advanced (LTE-A)), 5G communication (e.g. new radio (NR)), etc. specified in the 3rd generation partnership project (3GPP) standards. The 4G communication may be performed in frequency bands below 6GHz, and the 5G communication may be performed in frequency bands above 6GHz as well as frequency bands below 6GHz.

For example, in order to perform the 4G communication, 5G communication, and 6G communication, the plurality of communication may support a code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform spread OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter bank multi-carrier (FBMC) based communication protocol, universal filtered multi-carrier (UFMC) based communication protocol, space division multiple access (SDMA) based communication protocol, or the like.

Further, the communication system 100 may further include a core network. When the communication 100 supports 4G communication, the core network may include a serving gateway (S-GW), packet data network (PDN) gateway (P-GW), mobility management entity (MME), and the like. When the communication system 100 supports 5G communication or 6G communication, the core network may include a user plane function (UPF), session management function (SMF), access and mobility management function (AMF), and the like.

Meanwhile, each of the plurality of communication nodes 110-1, 110-2, 110-3, 120-1, 120-2, 130-1, 130-2, 130-3, 130-4, 130-5, and 130-6 constituting the communication system 100 may have the following structure.

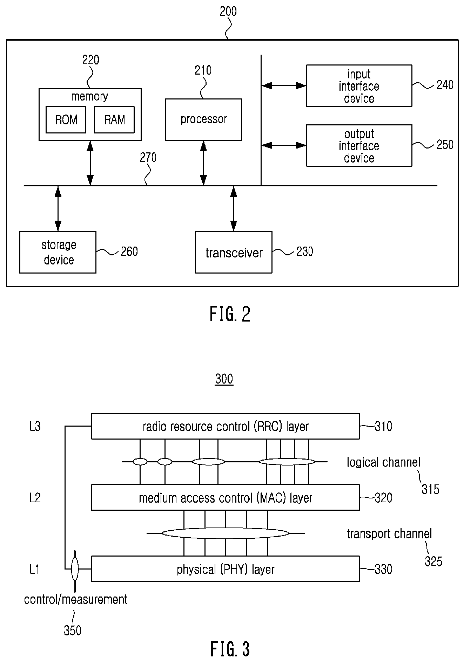

FIG. 2 is a block diagram illustrating an exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B (NB), evolved Node-B (eNB), gNB, base transceiver station (BTS), radio base station, radio transceiver, access point, access node, road side unit (RSU), radio remote head (RRH), transmission point (TP), transmission and reception point (TRP), eNB, gNB, or the like.

Each of the plurality of terminals 130-1, 130-2, 130-3, 130-4, 130-5, and 130-6 may refer to a user equipment (UE), terminal, access terminal, mobile terminal, station, subscriber station, mobile station, portable subscriber station, node, device, Internet of Thing (IoT) device, mounted module/device/terminal, on-board device/terminal, or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, device-to-device (D2D) communications (or, proximity services (ProSe)), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, methods for configuring and managing radio interfaces in a communication system will be described. Even when a method (e.g. transmission or reception of a signal) performed at a first communication node among communication nodes is described, the corresponding second communication node may perform a method (e.g. reception or transmission of the signal) corresponding to the method performed at the first communication node. That is, when an operation of a terminal is described, a corresponding base station may perform an operation corresponding to the operation of the terminal. Conversely, when an operation of a base station is described, a corresponding terminal may perform an operation corresponding to the operation of the base station.

FIG. 3 is a conceptual diagram illustrating exemplary embodiments of a radio interface protocol structure in a communication system.

Referring to FIG. 3, an exemplary embodiment of a radio interface protocol structure 300 of a communication system may be configured to include a radio resource control (RRC) layer 310, a medium access control (MAC) layer 320, a physical (PHY) layer 330, and the like. An exemplary embodiment of the radio interface protocol structure 300 shown in FIG. 3 may correspond to various exemplary embodiments of interfaces such as an interface between a terminal and a base station, an interface between an IAB-node distributed unit (IAB-DU) and an IAB-node mobile terminal (IAB-MT) of an integrated access backhaul (IAB) network, an interface between an IAB-DU and a lower node, an interface between an IAB-MT and an upper node, an interface between a plurality of terminals, and the like.

In the vicinity of the PHY layer 330, the RRC layer 310, and the MAC layer 320, and the like may be disposed above the PHY layer 330. For example, the MAC layer 320 may be disposed above the PHY layer 330. The RRC layer 310 may be disposed above the MAC layer 320.

The MAC layer 320 may be connected to a higher layer (e.g., RRC layer 310) through logical channels 315. The PHY layer 330 may be connected to the higher MAC layer 320 through transport channels 325. The PHY layer 330 may transmit and receive control information or measurement information 350 to and from the RRC layer 310.

The PHY layer 330 may be referred to as a 'layer 1' or 'L1'. The MAC layer 320 may be referred to as a 'layer 2' or 'L2'. The RRC layer 310 may be referred to as a 'layer 3' or 'L3'. The RRC layer 310 and the MAC layer 320 may be collectively referred to as the 'higher layer'.

In the present disclosure, 'L1 signaling' refers to signaling such as downlink control information (DCI) transmitted on a physical downlink control channel (PDCCH), uplink control information (UCI) transmitted on a physical uplink control channel (PUCCH), and sidelink control information (SCI) transmitted on a physical sidelink control channel (PSCCH), which are channels of the PHY layer 330. Similarly, in the present disclosure, 'higher layer signaling' may include L2 signaling transmitted through a MAC control element (CE), L3 signaling transmitted through RRC signaling, and the like.

Although omitted in FIG. 3 for convenience of description, information signaled through the interface between base stations or the interfaces (e.g. F1, next generation (NG) interface, etc.) between base station components such as a distributed unit (DU) and a central unit (CU) may also be collectively referred to as higher layer signaling along with the L2 signaling or L3 signaling.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is merely an example for the convenience of description, and exemplary embodiments of the numerologies used in the communication system may not be limited thereto. Each numerology $\mu$ may correspond to information of a subcarrier spacing (SCS) $\Delta f$ and a cyclic prefix (CP). The terminal may identify a numerology $\mu$ and a CP value applied to a downlink bandwidth part (BWP) or an uplink BWP based on higher layer parameters such as subcarrierSpacing, cyclicPrefix, and/or the like.

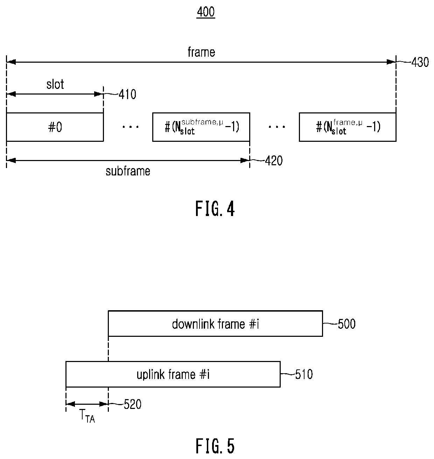

FIG. 4 is a conceptual diagram illustrating an exemplary embodiment of time resources in which radio signals are transmitted in a communication system.

Referring to FIG. 4, time resources in which radio signals are transmitted in a communication system 400 may be represented with a frame 430 comprising one or more ( $N_{\text{slot}}^{\text{frame},\mu} / N_{\text{slot}}^{\text{subframe},\mu}$ ) subframes, a subframe 420 comprising one or more ( $N_{\text{slot}}^{\text{subframe},\mu}$ ) slots, and a slot 410 comprising 14 ( $N_{\text{symb}}^{\text{slot}}$ ) OFDM symbols. In this case, according to a configured numerology, as the values of $N_{\text{symb}}^{\text{slot}}$, $N_{\text{slot}}^{\text{subframe},\mu}$, and $N_{\text{slot}}^{\text{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the 5G NR communication system (e.g. 5G communication system), the frame 430 may have a length of 10 ms, and the subframe 420 may have a length of 1 ms. Each frame 430 may be divided into two half-frames having the same length, and the first half-frame (i.e., half-frame 0) may be composed of subframes #0 to #4, and the second half-frame (i.e., half-frame 1) may be composed of subframes #5 to #9. One carrier may include a set of frames for uplink (i.e., uplink frames) and a set of frames for downlink (i.e., downlink frames).

FIG. 5 is a conceptual diagram illustrating a time difference between a reception timing of an i-th downlink frame and a transmission timing of an i-th uplink frame in an exemplary embodiment of a communication system.

Referring to FIG. 5, a time difference between a reception timing of an i-th downlink frame 500 and a transmission timing of an i-th uplink frame 510 may be a $T_{TA}$ 520. Accordingly, the terminal may start transmission of the uplink frame #i 510 at a time earlier by $T_{TA}$ compared to the reception timing of the downlink frame #i 500. $T_{TA}$ may be referred to as a timing advance or timing adjustment TA. The base station may instruct the terminal to change a value of $T_{TA}$ through higher layer signaling or L1 signaling. For example, $T_{TA}$ may be configured in the base station and/or terminal to be applied in a manner defined as $T_{TA} = (N_{TA} + N_{TA,offset})T_c$. In the case of 5G NR communication system, $T_c$ may be defined as $T_c = \dfrac{1}{(\Delta f_{max} \cdot N_f)}$ , $\Delta f_{max}$ may be defined as $\Delta f_{max} = 480$ *kHz,* $N_f$ may be defined as $N_f = 4096$, $N_{TA,offset}$ may be a value set by L3 signaling, and $N_{TA}$ may be a value determined by Equation 1 below by a value $T_A$ indicated by L2 signaling.

[Equation 1]

$$N_{TA} = \begin{cases} T_A \cdot 16 \cdot \dfrac{64}{2^\mu} & \text{(for random access response)} \\ N_{TA\_old} + \left((T_A - 31) \cdot 16 \cdot 64/2^\mu\right) & \text{(for other cases)} \end{cases}$$

Here, the description on $N_{TA,offset}$ and $N_{TA}$ may be an example for a specific situation, and various other options may exist, but in order not to obscure the gist of the description, all possible cases may not be listed in the present disclosure.

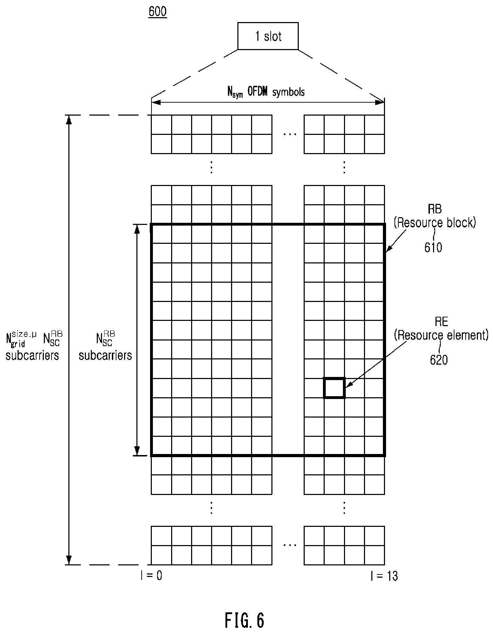

FIG. 6 is a conceptual diagram illustrating exemplary embodiments of a time/frequency resource grid of a communication system.

Referring to FIG. 6, a time/frequency resource grid 600 of a communication system may have $N_{grid}^{size,\mu} N_{sc}^{RB}$ subcarriers and $N_{slot}^{subframe,\mu}$ OFDMs. The resource grid may be defined for each numerology and each carrier. In this case, $N_{grid}^{start,\mu}$ may mean a position of a common resource block (CRB) indicated by higher layer signaling. $N_{grid}^{size,\mu}$ may mean the number of resource blocks (RBs) starting from the CRB. That is, $N_{grid}^{size,\mu}$ may mean a carrier bandwidth. $N_{grid}^{start,\mu}$ and/or $N_{grid}^{size,\mu}$ may have different values for each link direction (e.g., uplink, downlink, or sidelink) or for each numerology $\mu$. Here, the numerology $\mu$ may be referred to by other terms, such as a SCS configuration, if necessary.

Each element in the resource grid for an antenna port p and a SCS configuration $\mu$ may be referred to as a resource element (RE) 620. The RE 620 may be uniquely defined for each position $(k, l)_{p,\mu}$. In this case, $k$ may be a frequency axis index, and $l$ may indicate a symbol position on the time axis. RE$(k, l)_{p,\mu}$ may correspond to a physical resource used to transmit a physical channel or a signal complex value $a_{k,l}^{(p,\mu)}$. One RB 610 may be defined as consecutive $N_{sc}^{RB} = 12$ subcarriers on the frequency axis.

The 5G NR communication system can use a wider carrier bandwidth as compared with the 3G/4G communication system. The concept of bandwidth part (BWP) may be introduced in order to reduce high implementation complexity and power consumption of terminals due to the widened carrier bandwidth. One BWP may be composed of contiguous CRBs, a starting RB position $N_{BWP,i}^{start,\mu}$ of the BWP and the number $N_{BWP,i}^{size,\mu}$ of RBs constituting the BWP may satisfy Equations 2 and 3.

[Equation 2]

$$N_{\text{grid},x}^{\text{start},\mu} \leq N_{\text{BWP},i}^{\text{start},\mu} < N_{\text{grid},x}^{\text{start},\mu} + N_{\text{grid},x}^{\text{size},\mu}$$

[Equation 3]

$$N_{\text{grid},x}^{\text{start},\mu} < N_{\text{BWP},i}^{\text{start},\mu} + N_{\text{BWP},i}^{\text{size},\mu} \leq N_{\text{grid},x}^{\text{start},\mu} + N_{\text{grid},x}^{\text{size},\mu}$$

Up to four downlink BWPs within one component carrier (CC) may be configured for a terminal. Only one downlink BWP among the downlink BWPs configured for the terminal may be activated at a time. The terminal may not receive a physical downlink shared channel (PDSCH), a physical downlink control channel (PDCCH), a channel state information reference signal (CSI-RS), or the like outside the activated BWP.

Up to four uplink BWPs within one CC may be configured for a terminal. Only one uplink BWP among the uplink BWPs configured for the terminal may be activated at a time. The terminal may not transmit a physical uplink shared channel (PUSCH), a physical uplink control channel (PUCCH), a sounding reference signal (SRS), or the like outside the activated BWP.

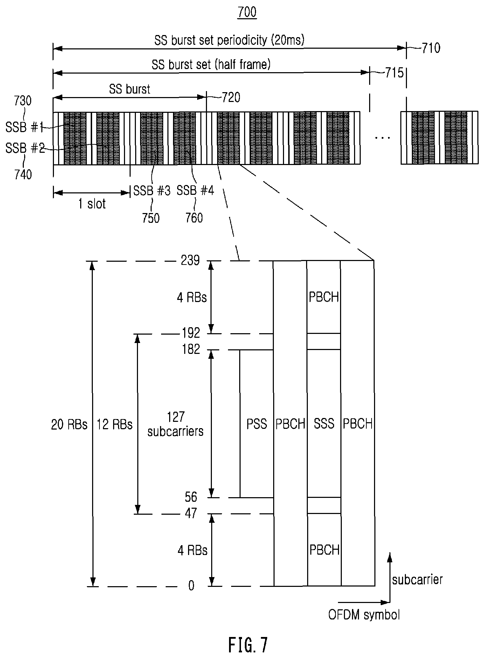

FIG. 7 is a conceptual diagram illustrating exemplary embodiments of a synchronization signal and physical broadcast channel (SS/PBCH) block or synchronization signal block (SSB) of a communication system.

Referring to FIG. 7, an SS/PBCH block 700 of a communication system may be configured with a primary synchronization signal (PSS) transmitted in 127 subcarriers in the middle of a first OFDM symbol, a secondary synchronization signal (SSS) transmitted in 127 subcarriers in the middle of a third OFDM symbol, and a physical broadcast channel (PBCH) transmitted in second, third, and fourth OFDM symbols. The PBCH occupying the widest bandwidth may be transmitted over 20 RBs, which may be 3.6 MHz based on 15 kHz SCS. The base station may transmit one SSB by applying the same beam. When the number of base station antennas increases or it is necessary to operate multiple beams such as applying one or more analog beams for high frequency support, the base station may support multi-beam operations by transmitting multiple SSBs. The term 'beam' may be expressed in various terms such as a transmission precoding or a spatial transmission filter. However, in order not to obscure the gist of the description, 'beam' is used hereinafter as a unified term.

For example, the base station may transmit a plurality of SSBs 730, 740, 750, and 760 to represent a plurality of beams (e.g., beam #1, beam #2, beam #3, beam #4). In this case, it may be possible that one or more SSBs are transmitted within one slot according to a pattern predetermined according to each numerology. The SSBs 730, 740, 750, and 760 to which different beams are applied may be included in an SS burst 720. In other words, the SSBs 730, 740, 750, and 760 to which different beams are applied may be configured as one group. The terminal may assume a half-frame window having a length of 5 ms at the time of monitoring SSBs. An SS burst set 715 configured by higher layer signaling within the half-frame window may include one or more SS bursts 720. The terminal may not know RRC configuration value(s) or may not be able to use RRC configuration value(s) in an initial access (IA) procedure. In this case, the terminal may receive or measure the SSBs assuming that a periodicity of the SS burst set 710 is 20 ms.

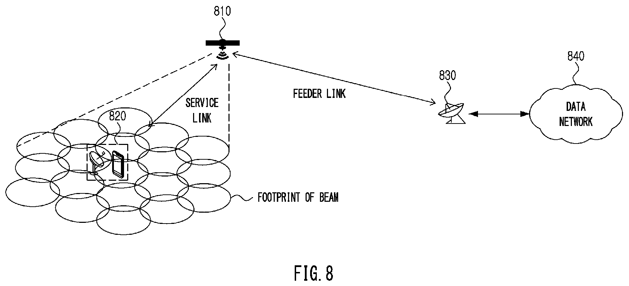

FIG. 8 is a conceptual diagram illustrating a first exemplary embodiment of a non-terrestrial network.

Referring to FIG. 8, a non-terrestrial network (NTN) may include a satellite 810, a communication node 820, a gateway 830, a data network 840, and the like. The NTN shown in FIG. 8 may be an NTN based on a transparent payload. The satellite 810 may be a low earth orbit (LEO) satellite (at an altitude of 300 to 1,500 km), a medium earth orbit (MEO) satellite (at an altitude of 7,000 to 25,000 km), a geostationary earth orbit (GEO) satellite (at an altitude of about 35,786 km), a high elliptical orbit (HEO) satellite, or an unmanned aircraft system (UAS) platform. The UAS platform may include a high altitude platform station (HAPS).

The communication node 820 may include a communication node (e.g. a user equipment (UE) or a terminal) located on a terrestrial site and a communication node (e.g. an airplane, a drone) located on a non-terrestrial space. A service link may be established between the satellite 810 and the communication node 820, and the service link may be a radio link. The satellite 810 may provide communication services to the communication node 820 using one or more beams. The shape of a footprint of the beam of the satellite 810 may be elliptical.

The communication node 820 may perform communications (e.g. downlink communication and uplink communication) with the satellite 810 using LTE technology and/or NR technology. The communications between the satellite 810 and the communication node 820 may be performed using an NR-Uu interface. When dual connectivity (DC) is supported, the communication node 820 may be connected to other base stations (e.g. base stations supporting LTE and/or NR functionality) as well as the satellite 810, and perform DC operations based on the techniques defined in the LTE and/or NR specifications.

The gateway 830 may be located on a terrestrial site, and a feeder link may be established between the satellite 810 and the gateway 830. The feeder link may be a radio link. The gateway 830 may be referred to as a 'non-terrestrial network (NTN) gateway'. The communications between the satellite 810 and the gateway 830 may be performed based on an NR-Uu interface or a satellite radio interface (SRI). The gateway 830 may be connected to the data network 840. There may be a 'core network' between the gateway 830 and the data network 840. In this case, the gateway 830 may be connected to the core network, and the core network may be connected to the data network 840. The core network may support the NR technology. For example, the core network may include an access and mobility management function (AMF), a user plane function (UPF), a session management function (SMF), and the like. The communications between the gateway 830 and the core network may be performed based on an NG-C/U interface.

Alternatively, a base station and the core network may exist between the gateway 830 and the data network 840. In this case, the gateway 830 may be connected with the base station, the base station may be connected with the core network, and the core network may be connected with the data network 840. The base station and core network may support the NR technology. The communications between the gateway 830 and the base station may be performed based on an NR-Uu interface, and the communications between the base station and the core network (e.g. AMF, UPF, SMF, and the like) may be performed based on an NG-C/U interface.

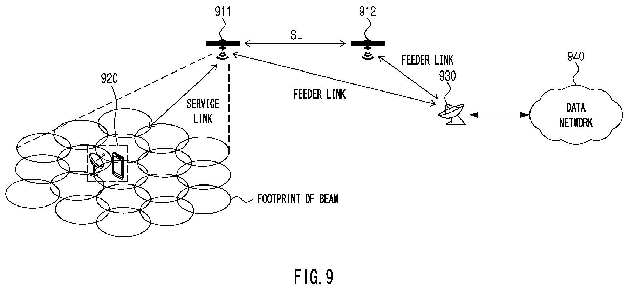

FIG. 9 is a conceptual diagram illustrating a second exemplary embodiment of a non-terrestrial network.

Referring to FIG. 9, a non-terrestrial network may include a first satellite 911, a second satellite 912, a communication node 920, a gateway 930, a data network 940, and the like. The NTN shown in FIG. 9 may be a regenerative payload based NTN. For example, each of the satellites 911 and 912 may perform a regenerative operation (e.g. demodulation, decoding, re-encoding, re-modulation, and/or filtering operation) on a payload received from other entities (e.g. the communication node 920 or the gateway 930), and transmit the regenerated payload.

Each of the satellites 911 and 912 may be a LEO satellite, a MEO satellite, a GEO satellite, a HEO satellite, or a UAS platform. The UAS platform may include a HAPS. The satellite 911 may be connected to the satellite 912, and an inter-satellite link (ISL) may be established between the satellite 911 and the satellite 912. The ISL may operate in an RF frequency band or an optical band. The ISL may be established optionally. The communication node 920 may include a terrestrial communication node (e.g. UE or terminal) and a non-terrestrial communication node (e.g. airplane or drone). A service link (e.g. radio link) may be established between the satellite 911 and communication node 920. The satellite 911 may provide communication services to the communication node 920 using one or more beams.

The communication node 920 may perform communications (e.g. downlink (DL) communication or uplink (UL) communication) with the satellite 911 using LTE technology and/or NR technology. The communications between the satellite 911 and the communication node 920 may be performed using an NR-Uu interface. When DC is supported, the communication node 920 may be connected to other base stations (e.g. base stations supporting LTE and/or NR functionality) as well as the satellite 911, and may perform DC operations based on the techniques defined in the LTE and/or NR specifications.

The gateway 930 may be located on a terrestrial site, a feeder link may be established between the satellite 911 and the gateway 930, and a feeder link may be established between the satellite 912 and the gateway 930. The feeder link may be a radio link. When the ISL is not established between the satellite 911 and the satellite 912, the feeder link between the satellite 911 and the gateway 930 may be established mandatorily.

The communications between each of the satellites 911 and 912 and the gateway 930 may be performed based on an NR-Uu interface or an SRI. The gateway 930 may be connected to the data network 940. There may be a core network between the gateway 930 and the data network 940. In this case, the gateway 930 may be connected to the core network, and the core network may be connected to the data network 940. The core network may support the NR technology. For example, the core network may include AMF, UPF, SMF, and the like. The communications between the gateway 930 and the core network may be performed based on an NG-C/U interface.

Alternatively, a base station and the core network may exist between the gateway 930 and the data network 940. In this case, the gateway 930 may be connected with the base station, the base station may be connected with the core network, and the core network may be connected with the data network 940. The base station and the core network may support the NR technology. The communications between the gateway 930 and the base station may be performed based on an NR-Uu interface, and the communications between the base station and the core network (e.g. AMF, UPF, SMF, and the like) may be performed based on an NG-C/U interface.

Meanwhile, each of the entities (e.g. satellite, communication node, gateway, etc.) constituting the non-terrestrial networks shown in FIGS 8 and 9 may include at least one processor, a memory, and a transceiver connected to a network to perform communication. In addition, the entity may further include an input interface device, an output interface device, a storage device, and the like. The components included in the entity may be connected by a bus to communicate with each other. However, each component included in the entity may be connected to the processor through a separate interface or a separate bus instead of the common bus. For example, the processor may be connected to at least one of the memory, the transceiver, the input interface device, the output interface device, and the storage device through a dedicated interface. The processor may execute at least one instruction stored in at least one of the memory and the storage device.

The processor may refer to a central processing unit (CPU), a graphics processing unit (GPU), or a dedicated processor on which the methods according to the exemplary embodiments of the present disclosure are performed. Each of the memory and the storage device may be configured as at least one of a volatile storage medium and a nonvolatile storage medium. For example, the memory may be configured with at least one of a read only memory (ROM) and a random access memory (RAM).

Meanwhile, scenarios in the NTN may be defined as shown in Table 4 below.

[Table 4]

|  | NTN shown in FIG. 8 | NTN shown in FIG. 9 |
|---|---|---|
| GEO | Scenario A | Scenario B |
| LEO (steerable beams) | Scenario C1 | Scenario D1 |
| LEO (beams moving with satellite) | Scenario C2 | Scenario D2 |

When the satellite 810 in the NTN shown in FIG. 8 is a GEO satellite (e.g. a GEO satellite that supports a transparent function), this may be referred to as 'scenario A'. When the satellites 911 and 912 in the NTN shown in FIG. 9 are GEO satellites (e.g. GEOs that support a regenerative function), this may be referred to as 'scenario B'.

When the satellite 810 in the NTN shown in FIG. 8 is an LEO satellite with steerable beams, this may be referred to as 'scenario C1'. When the satellite 810 in the NTN shown in FIG. 8 is an LEO satellite having beams moving with the satellite, this may be referred to as 'scenario C2'. When the satellites 911 and 912 in the NTN shown in FIG. 9 are LEO satellites with steerable beams, this may be referred to as 'scenario D1'. When the satellites 911 and 912 in the NTN shown in FIG. 9 are LEO satellites having beams moving with the satellites, this may be referred to as 'scenario D2'. Parameters for the scenarios defined in Table 4 may be defined as shown in Table 5 below.

[Table 5]

|  | Scenarios A and B | Scenarios C and D |
|---|---|---|
| Altitude | 35,786 km | 600 km<br>1,200 km |
| Spectrum (service link) | < 6 GHz (e.g. 2 GHz)<br>> 6 GHz (e.g. DL 20 GHz, UL 30 GHz) | |
| Maximum channel bandwidth capability (service link) | 30 MHz for band <6 GHz<br>1 GHz for band >6 GHz | |
| Maximum distance between satellite and communication node (e.g. UE) at the minimum elevation angle | 40,581 km | 1,932 km (altitude of 600 km)<br>3,131 km (altitude of 1,200 km) |
| Maximum round trip delay (RTD) (only propagation delay) | Scenario A: 541.46 ms (service and feeder links)<br>Scenario B: 270.73 ms (only service link) | Scenario C: (transparent payload: service and feeder links)<br>-5.77 ms (altitude of 60 0km)<br>-41.77 ms (altitude of 1,200 km)<br>Scenario D: (regenerative payload: only service link)<br>-12.89 ms (altitude of 600 km)<br>-20.89 ms (altitude of 1,200 km) |
| Maximum delay variation within a single beam | 16 ms | 4.44 ms (altitude of 600 km)<br>6.44 ms (altitude of 1,200 km) |
| Maximum differential delay within a cell | 10.3 ms | 3.12 ms (altitude of 600 km)<br>3.18 ms (altitude of 1,200 km) |
| Service link | NR defined in 3GPP | |

(continued)

| | Scenarios A and B | Scenarios C and D |
|---|---|---|
| Feeder link | Radio interfaces defined in 3GPP or non-3GPP | |

In addition, in the scenarios defined in Table 4, delay constraints may be defined as shown in Table 6 below.

[Table 6]

| | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

Meanwhile, a terminal may support calculation of a specific timing advance (TA) of the terminal based on a location obtained from a global navigation satellite system (GNSS) and ephemeris information of a serving satellite. As an example, $N_{TA}$ may be defined as 0 for physical random access channel (PRACH). $N_{TA}$ may be updated based on a TA command field of a Msg2/MsgB and a medium access control (MAC) control element (CE) TA command. $N_{TA,\text{UE-specific}}$ may be a TA estimated by the terminal itself to pre-compensate for a service link delay, and $N_{TA,\text{common}}$ may be a network-controlled common TA and may include a timing offset regarded necessary in the network. $N_{TA,\text{common}}$ may support a value of 0.

$N_{TA,\text{offset}}$ may be a fixed offset used to calculate the TA. The terminal may assume that a round trip time (RTT) between the terminal and a base station (gNB) is not equal to a TA calculated for Msg1/MsgA. A validity duration configured in the network for satellite ephemeris data may indicate the maximum time for which the terminal can apply the satellite ephemeris without obtaining a new satellite ephemeris. Update of $N_{TA}$ based on the TA command field of Msg2/MsgB and the MAC CE TA command may be used to modify an uplink TA as follows. When a timing advance command (TAC) is received through the Msg2/MsgB, the terminal may receive a first adjustment value, and $N_{TA}$ may be updated as shown in Equation 4 below.

[Equation 4]

$$N_{TA} = N_{TA,old} + T_A \cdot 16 \cdot 64/2^\mu$$

Here, $T_A$ may be a value in the TAC field of Msg2/MsgB. When a TAC provided by the MAC CE is received, $N_{TA}$ may be updated as shown in Equation 5 below. In other words, the terminal may update the previous $N_{TA}$, denoted by $N_{TA,old}$, to $N_{TA\_new}$.

[Equation 5]

$$N_{TA\_new} = N_{TA,old} + (T_A - 31) \cdot 16 \cdot 64/2^\mu$$

Here, $T_A$ may be a value in the TAC field of the MAC CE. The common TA may include parameters indicating a timing drift. The terminal may apply the common TA according to parameters provided by the network (if any), and an offset between the common TA according to the parameters provided by the network and an RTT of an actual feeder may not be considered when defining the uplink timing error requirements.

To improve the timing relationship, the terminal may introduce a scheduling offset $K_{offset}$. The scheduling offset $K_{offset}$ may be set by system information, and the scheduling offset $K_{offset}$ may be used in an initial access procedure. In this case, a cell-specific $K_{offset}$ used for all beams of at least one cell may be supported. In addition to $K_{offset}$, a scheduling offset for MAC CE may be defined as $K_{mac}$.

A downlink frame timing and an uplink frame timing may be aligned at the base station. In this case, $K_{mac}$ may not be needed for operations and/or assumptions of the terminal with respect to downlink and uplink configurations indicated

13

by a MAC CE command transmitted on a PDSCH. On the other hand, a downlink frame timing and an uplink frame timing may not be aligned at the base station. In this case, $K_{mac}$ may be needed for operations and/or assumptions of the terminal with respect to a downlink configuration indicated by a MAC CE command transmitted on a PDSCH. Information on $K_{mac}$ may be included in system information. In other words, the base station may transmit system information including $K_{mac}$ to the terminal. The terminal may receive the system information from the base station and obtain $K_{mac}$ included in the system information.

Update of $K_{offset}$ may be supported after the initial access procedure. By introducing $K_{offset}$ for TA command reception, adjustment (e.g. alignment, modification, control) of an uplink transmission timing may be supplemented. For update of $K_{offset}$ after the initial access procedure, the network (e.g. base station) may provide and/or update a UE-specific $K_{offset}$ using a MAC CE. For the cell-specific $K_{offset}$ set by system information, one of the following two options (e.g. Options 1 and 2) may be selected.

Option 1 may be a scheme of signaling one offset value. For example, a value signaled according to Option 1 may include an RTT of the service link and an RTT between the service satellite (e.g. serving satellite) and a reference point. Option 2 may be a scheme of signaling two offset values. The two offset values may include a first offset value and a second offset value. $K_{offset}$ may be a sum of the two offset values. For example, the first offset value may be the RTT between the serving satellite and the reference point (or a value determined based on the common TA). The second offset value may be the RTT of the service link.

If no $K_{offset}$ other than the value indicated by system information (e.g. $K_{offset}$) is provided to the terminal, the terminal may apply the value (e.g. $K_{offset}$) indicated by the system information to improve all timing relationships. The network (e.g. base station) may provide the terminal with $K_{mac}$ for MAC CE, which is a scheduling offset other than $K_{offset}$. If the network does not provide $K_{mac}$ to the terminal, the terminal may assume $K_{mac}=0$.

An estimate of a terminal-base station RTT may be equal to a sum of the terminal's TA and $K_{mac}$. The terminal-base station RTT' may refer to the RTT between the terminal and the base station. The TA of the terminal may be determined based on $T_{TA}$. An estimate of a base station-satellite RTT may be equal to a sum of $N_{TA,common} \times T_C$ and $K_{mac}$. The base station-satellite RTT may refer to an RTT in the link between the base station and the satellite. If the network does not provide $K_{mac}$ to the terminal, the terminal may assume $K_{mac}=0$.

An NTN ephemeris (e.g. ephemeris information) may be divided into ephemeris of the serving cell and ephemeris of neighboring cell(s). Information on when a cell stops local services and/or timing information (e.g. timer and/or absolute time) for a new cell may be supported, at least in a quasi-Earth-fixed NTN scenario. When both types of ephemeris information (e.g. ephemeris information of the serving cell and ephemeris information of neighboring cell(s)) are required, they may be obtained based on system information and/or ephemeris information. At least for uplink scheduling adaptation, the terminal may report information on UE-specific TA pre-compensation. While an RA procedure is performed, the terminal may report UE-specific TA pre-compensation to the base station using a MAC CE.

If the reporting operation is activated by the network, the terminal may report information on the UE-specific TA pre-compensation to the base station (e.g. network) in the RA procedure using a MAC CE (e.g. transmission procedure of MsgA, transmission procedure of Msg3, and/or transmission procedure of Msg5). The information on the UE-specific TA pre-compensation reported in the RA procedure using the MAC CE may be a UE-specific TA. The reporting of the UE-specific TA (e.g. reporting of UE-specific TA pre-compensation) in the RA procedure may be activated/deactivated by system information (SI). The reporting of the UE-specific TA (e.g. reporting information on the UE-specific TA) may be supported in the connected mode (e.g. RRC connected mode). An event trigger scheme may be supported to report information on the UE-specific TA in the connected mode. If a triggering event is configured, the terminal may report information on the UE-specific TA pre-compensation to a target cell in the RA procedure.

If the terminal is not able to report UE location information in the connected mode, the content of the UE-specific TA reported to the base station in the connected mode may be information on the UE-specific TA pre-compensation. If the content of the information on the UE-specific TA reported to the base station is UE location information of the terminal in the connected mode, an RRC signaling may be used to report the UE location information of the terminal. If the terminal is able to report UE location information of the terminal to the base station in the connected mode, for a purpose of TA reporting in the connected mode (e.g. reporting information on the UE-specific TA, reporting UE location information), the network (e.g. base station) may configure the terminal to report the UE-specific TA pre-compensation and/or the UE location information. If the content of the information on the UE-specific TA reported to the network is a value of the TA pre-compensation (e.g. UE-specific TA pre-compensation) in the connected mode, the terminal may use a MAC CE to report information on the UE-specific TA.

The reporting of the UE location may be performed based on an event-triggering scheme. The reporting of the UE location based on the event-triggering scheme may be configured by the base station to obtain information of updates of the UE location of the terminal in the connected mode (e.g. RRC connected mode).

In order to configure the terminal to report information on the UE-specific TA in a handover procedure, a new indication in RRC reconfiguration with synchronization may not be necessary. The SI indicating whether activating or deactivating the TA reporting (e.g. reporting of information on the UE-specific TA) in the target cell may be transmitted through a handover command.

The information on the UE-specific TA pre-compensation may not be reported in an RA procedure triggered according to a request for other SI. The event trigger for reporting information on the UE-specific TA (e.g. UE-specific TA pre-compensation) may be based on the TA value. A TA offset threshold may be used in the event-triggered reporting procedure. At least the TA offset threshold may be a value between a current UE-specific TA value and the last successfully reported UE-specific TA value.

In the quasi-Earth-fixed scenario or Earth-fixed scenario, timing information on when the cell stops serving the corresponding area may be needed to support cell reselection operations (e.g. NTN cell reselection operations). The base station (e.g. cell, network) may transmit, to the terminal, system information including timing information on when the cell stops services to the corresponding area. The system information may be broadcast. A time at which the cell stops services to the corresponding area may refer to 'cell stop time'. The operation of broadcasting of information on the cell stop time using an SIB may be applied to quasi-Earth-fixed cells. In other words, the operation of broadcasting information on the cell stop time using an SIB may not apply to moving cells. In the quasi-Earth-fixed scenario, the timing information on when the cell stops services (e.g. cell stop time) may be used to determine when to perform measurements on neighboring cells. In the quasi-Earth-fixed scenario (e.g. quasi-Earth-fixed cells), the system information including information on a reference location of the cell (e.g. serving cell and/or neighboring cell) may be broadcast. The reference location may be a center of the cell.

In the quasi-Earth-fixed scenario, the terminal may start measuring neighboring cells before the serving cell stops serving the current area. In the quasi-Earth-fixed scenario, the broadcasted information on the cell stop time (e.g. timing information) may indicate a time when the cell does not cover the current area. 'The cell does not cover the current area' may mean that the cell does not provide services for the current area. In the quasi-Earth-fixed scenario, the terminal may be configured to perform measurements on neighboring cells (e.g. adjacent cells) before the broadcasted stop time of the serving cell (e.g. cell stop time, the time when the cell stops covering the current area). An exact time at which the terminal performs the measurement operation on neighboring cells may be determined depending on an implementation of the terminal.

Meanwhile, non-terrestrial networks may support the following three types of service links.

1) Earth-fixed service link: An Earth-fixed service link may be a service link provided by a beam that always covers the same geographic area. For example, a service link provided by a geostationary orbit (GSO) satellite may be an Earth-fixed service link.

2) Quasi-Earth-fixed service link: A quasi-Earth-fixed service link may be a service link provided by beam(s) that cover one geographical area for a limited period, and cover a different geographical area for another period. For example, a service link provided by a non-geostationary orbit (NGSO) satellite that generates steerable beams may be a quasi-Earth-fixed service link.

3) Earth-moving service link: An Earth-moving service link may be a service link corresponding to a case where a coverage area provided by the service link from a satellite moves on the Earth's surface. For example, a service link provided by an NGSO satellite using a fixed beam or non-steerable beam may be an Earth-moving service link.

The NTN may provide quasi-Earth-fixed service links or Earth-moving service links via NGSO satellites. In addition, the NTN may provide Earth-fixed-service links via GSO satellites. Depending on a type of service link, the following three types of cells can be supported in the NTN.

1) Earth-fixed cell: An Earth-fixed cell may be a cell that uses an Earth-fixed service link.
2) Quasi-Earth-fixed cell: A quasi-Earth-fixed cell may be a cell that uses a quasi-Earth-fixed service link.
3) Earth-moving cell: An Earth-moving cell may be a cell that uses an Earth-moving service link.

Mobility of terminals may be supported in the NTN. Specifically, the NTN may support mobility through cell reselection for terminals in the idle mode or inactive mode. For example, to support mobility of terminals in the idle mode or inactive mode in a TN, the terminal may measure neighboring cells and reselect a cell to camp on based on measurement results. The NTN may also support mobility of terminals in the idle mode or inactive mode through cell reselection using the same mechanism as TN. The NTN can support mobility of terminals in the idle mode or inactive mode through cell reselection.

On the other hand, a connected mode terminal may perform handover, and mobility can be supported through the handover. For example, in a TN, to support mobility of a terminal in the connected mode, the terminal may measure neighboring cells around a currently connected cell (i.e. source cell), and perform a handover to a cell (i.e. target cell) selected based on measurement results. Even in the NTN, mobility of a terminal in the connected mode can be supported through handover using fundamentally the same mechanism as TN.

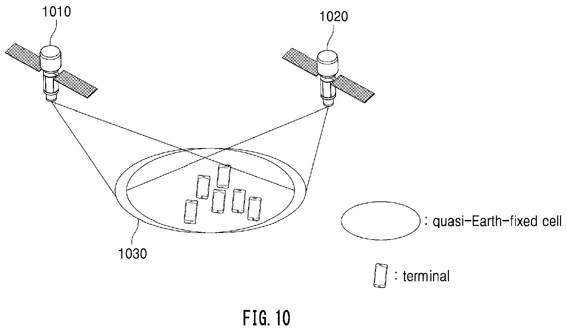

FIG. 10 is a conceptual diagram illustrating exemplary embodiments of a satellite switching method in a quasi-Earth-fixed cell.

Referring to FIG. 10, a first satellite 1010 and a second satellite 1020 may be NGSO satellites moving along orbits. A cell coverage 1030 may be served by the first satellite 1010. As the first satellite 1010 moves, the satellite providing services to the cell coverage 1030 may be switched from the first satellite 1010 to the second satellite 1020. In other words, FIG. 10 illustrates a satellite switching scenario for a quasi-Earth-fixed cell, without being limited to this scenario. In the following, in the satellite switching process, a satellite before switching may be referred to as a source satellite, and a satellite after switching may be referred to as a target satellite. However, this is merely for convenience of description and exemplary embodiments of the present disclosure are not limited to such terms.

The satellite switching methods for quasi-Earth-fixed cells may be classified into hard satellite switching and soft satellite switching depending on whether service links are provided simultaneously during the switching process. The names of hard satellite switching and soft satellite switching are merely for convenience of description and exemplary embodiments of the present disclosure are not limited to such terms.

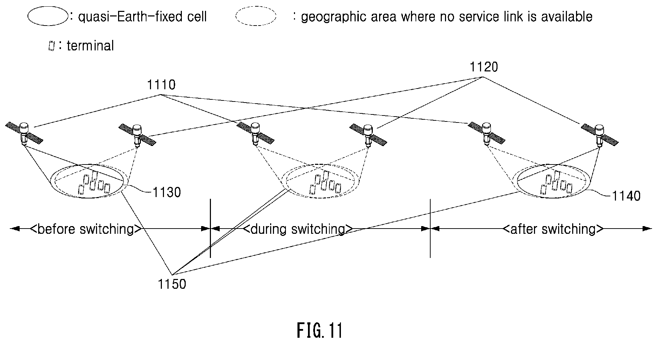

FIG. 11 is a conceptual diagram illustrating exemplary embodiments of a hard satellite switching method in a quasi-Earth-fixed cell.

Referring to FIG. 11, in a hard satellite switching method, a first satellite 1110 may provide a service link to terminals using a quasi-Earth-fixed cell 1130 before switching. After switching, a second satellite 1120 may provide a service link to the terminals using a quasi-Earth-fixed cell 1140. However, during the switching, the first satellite 1110 and the second satellite 1120 may not provide communication services to the terminals at the same time. Accordingly, during the switching, terminals may be located in a geographic area 1150 where communication services are not provided.

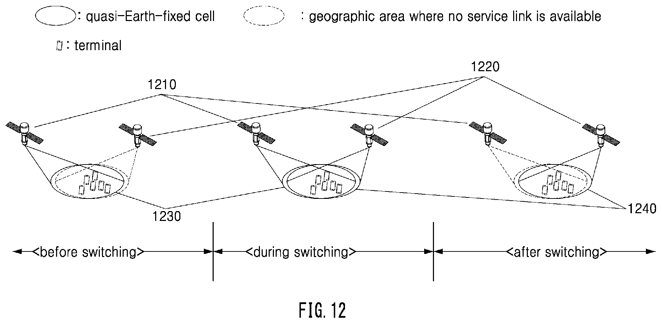

FIG. 12 is a conceptual diagram illustrating exemplary embodiments of a soft satellite switching method in a quasi-Earth-fixed cell.

Referring to FIG. 12, in a soft satellite switching method, a first satellite 1210 may provide communication services to terminals using a quasi-Earth-fixed cell 1230 before switching. After switching, a second satellite 1220 may provide communication services to the terminals using a quasi-Earth fixed-cell 1240. During the switching, the first satellite 1210 and the second satellite 1220 may provide communication services to the terminals at the same time. Accordingly, during the switching, the terminals may be located in a geographic area where two service links are provided.

In the case of soft satellite switching described above, a communication service by a target satellite can be provided before a communication service by a source satellite is stopped. The communication service by the source satellite may subsequently be stopped. In other words, communication services by two satellites can be maintained during a switching time. For example, when the first satellite 1210 is providing a communication service in a cell coverage and is switched to the second satellite 1220 by satellite switching, the communication service of the second satellite 1220 may be provided before the communication service of the first satellite 1210 is stopped, and the communication service of the first satellite 1210 may be stopped after the communication service of the second satellite 1220 is provided.

The present disclosure considers an unchanged physical cell identifier (PCI) satellite switching scenario in relation to the above-described satellite switching scenario. The unchanged PCI satellite switching method may be a hard satellite switching method or a soft satellite switching method for satellite switching in the quasi-Earth-fixed cell scenario. In addition, in the unchanged PCI satellite switching method, satellites before and after satellite switching may be connected to the same base station. In addition, in the unchanged PCI satellite switching method, the same PCI may be used before and after satellite switching. In addition, in the unchanged PCI switching method, the same frequency for transmitting synchronous signal blocks (SSBs) may be used before and after satellite switching. Here, the PCI may be a cell identifier that allows different cells to be distinguished. In addition, the SSB may include a primary synchronization signal (PSS), a secondary synchronization signal (SSS), and a physical broadcast channel (PBCH).

The description below is based on the unchanged PCI satellite switching scenario, but exemplary embodiments may not be limited to this and may be applicable to other scenarios as well. In addition, the unchanged PCI satellite switching scenario may correspond to a scenario of satellite switching with re-synchronization. For example, the unchanged PCI satellite switching scenario may correspond to the scenario of satellite switching with re-synchronization because the same PCI and the same frequency for SSB transmission are used for the same or similar areas in satellite switching of the quasi-Earth-fixed cell. In addition, the unchanged PCI satellite switching scenario may not be limited to a specific name as a scenario under the above-described conditions, and may be referred to by a different name. In other words, the unchanged PCI satellite switching scenario may not be limited to a specific name, may be applied in various scenarios operating based on the above description, and may not be limited to a specific form. In the following, for convenience of description, the term 'unchanged PCI satellite switching scenario' will be used.

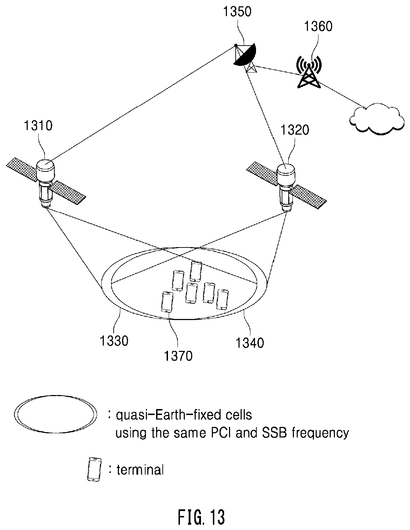

FIG. 13 is a conceptual diagram illustrating a first exemplary embodiment of an unchanged PCI satellite switching method.

Referring to FIG. 13, a first satellite 1310 and a second satellite 1320 may be orbiting satellites. In this case, the second satellite 1320 may be connected to the same gateway 1350 and/or base station 1360 as a gateway and/or base station to which the first satellite 1310 is connected. Satellite switching may be performed from the first satellite 1310, which is a source satellite, to the second satellite 1320, which is a target satellite.

For example, the first satellite 1310 may provide services to terminals 1370 using a quasi-Earth-fixed cell 1330. The first satellite 1310 may stop providing services to the terminals 1370 using the quasi-Earth fixed cell 1330 as it moves. Then, the second satellite 1320 may replace the services for the terminals 1370 using a quasi-Earth-fixed cell 1340. As described above, the first satellite 1310 and the second satellite 1320 may perform hard satellite switching. At this time, the second satellite 1320 may be connected or in the process of connecting to the gateway 1350 or base station 1360 to which the first satellite 1310 is already connected. Accordingly, the second satellite 1320 may serve the same service coverage as the service coverage previously served by the first satellite 1310, by using the quasi-Earth-fixed cell 1340.

Accordingly, the satellite serving the terminals 1370 may be hard-satellite-switched from the first satellite 1310 to the second satellite 1320. Accordingly, a PCI, frequency, etc. may not change after the satellite serving the terminals 1370 is switched from the first satellite 1310 to the second satellite 1320.

As another example, the first satellite 1310 may provide communication services to the terminals 1370 using the quasi-Earth-fixed cell 1330. After switching, the second satellite 1320 may provide communication services to the terminals 1370 using the quasi-Earth fixed cell 1340. During the switching, the first satellite 1310 and the second satellite 1320 may provide communication services to the terminals 1370 at the same time. Accordingly, during the switching, the terminals 1370 may be located in a geographic area where two communication services are available.

In the case of soft satellite switching as described above, communication services by the target satellite may be provided before communication services by the source satellite are stopped. The communication services of the source satellite may subsequently be stopped. In other words, communication services by two satellites can be maintained during a switching time. For example, when the first satellite 1310 is providing communication services in a cell coverage and is switched to the second satellite 1320 by the satellite switching, the communication services of the second satellite 1320 may be provided before the communication services of the first satellite 1310 are stopped. The communication services of the first satellite 1310 may be stopped after the communication services of the second satellite 1320 are provided. The unchanged PCI satellite switching scenario may be described as shown in Table 7.

[Table 7]

| |
|---|
| - In unchanged PCI satellite switching, the cells provided by the two satellites may be quasi-Earth-fixed cells. |
| - The unchanged PCI satellite switching may be either hard satellite switching or soft satellite switching. |
| - In the unchanged PCI satellite switching, feeder links before and after switching may be connected to the same base station. |
| - In the unchanged PCI satellite switching, frequency for SSB transmission before and after switching may be the same. |
| - In the unchanged PCI satellite switching, PCIs before and after switching may be the same. |

The unchanged PCI satellite switching method may not be a network-involved layer 3 (L3) handover (HO) method or L3 conditional handover (CHO) method. In the following, for convenience of description, handover (or conditional handover) may be referred to as '(C)HO'. In addition, a cell to which a terminal is connected before (C)HO is referred to as 'source cell', and a cell to which the terminal wishes to connect after (C)HO is referred to as 'target cell', but exemplary embodiments are not limited to these names.

As an example, when providing a service to a terminal through a quasi-Earth-fixed cell using NGSO satellites, a satellite responsible for a given area of the ground may be continuously changed. A terminal in the connected mode belonging to the quasi-Earth-fixed cell may generally perform an L3 handover or L3 conditional handover when the satellite changes. However, in the unchanged PCI method, the terminal in the connected mode may not perform an L3 handover or L3 conditional handover. As an example, a terminal operating in the connected mode based on the unchanged PCI satellite switching scenario does not perform (C)HO, thereby overcoming the disadvantage of (C)HO. In other words, in the unchanged PCI satellite switching method, a terminal operating in the connected mode may not require radio resource control (RRC) signaling required for handover or conditional handover, thereby reducing signaling overhead. As a specific example, in the case of handover in a quasi-Earth-fixed cell, all terminals in the cell may perform handover almost simultaneously. As a result, RRC signaling may explode in an instant. In other words, a handover storming phenomenon may occur. Moreover, the time interval between satellite switches may be short in the quasi-Earth-fixed cell. Accordingly, a probability of handover failure may increase. However, the unchanged PCI satellite switching method may avoid such handover failures in the terminal. The unchanged PCI satellite switching method may avoid random access channel (RACH) congestion. The terminal may pre-compensate an uplink TA with a target satellite.

In this case, the terminal may omit a random access (RA) procedure required immediately after handover or conditional handover to the target cell in the handover or conditional handover. A reason for omitting the random access procedure is that even if the TA is not adjusted through the RA procedure, regular communication may still be possible if the TA falls within an acceptable range for the base station, even though optimal performance in uplink communication may not be achieved. If the random access procedure is omitted, the terminal may adjust the TA while performing regular communication after switching.

In the case of handover in a quasi-Earth-fixed cell, all terminals in the cell perform handover almost simultaneously, so simultaneous random access procedures may occur immediately after the handover. As a result, a RACH capacity may become insufficient. This problem may be called a RACH congestion problem. In the unchanged PCI satellite switching method, random access procedures may be omitted, so the RACH congestion problem can be avoided. If random access procedures can be omitted in the unchanged PCI satellite switching method, terminals in the quasi-Earth-fixed cell can save power. Power can be saved because the terminals may not perform L3 (conditional) handover or random access procedures due to movement of the satellite in the quasi-Earth-fixed cell.

As an example, the unchanged PCI method can enable an NTN operator to configure quasi-Earth-fixed cells with NGSO satellites. In this case, it is made possible for the NTN operator to serve a certain area on the ground using the same base station, providing advantages such as flexibility in NTN configuration and lower costs.

Hereinafter, the present disclosure considers system information (SI). The system information may be information required for terminals to connect to a base station and communicate with the connected base station. The system information may be broadly classified into a master information block (MIB) and system information blocks (SIBs). The terminal may receive the MIB from the base station through a physical broadcast channel (PBCH). Additionally, the terminal may receive the SIB from the base station through a physical downlink shared channel (PDSCH), which is a common downlink channel. The base station may periodically broadcast the SIBs. Then, the terminal may receive the SIB periodically broadcast from the base station. Additionally and/or alternatively, the terminal may request necessary SIB(s) from the base station. Then, the base station may receive a request for SIB(s) from the terminal. Then, the base station may transmit the requested SIB(s) to the terminal. Accordingly, the terminal may receive the requested SIB(s) from the base station. This method may be referred to as 'on-demand method'.

The SIBs may be divided into 'SIBx' depending on a broadcast periodicity, importance, or relevance. Here, x may be an integer of 1 or more. Unlike TN cells, an SIB19 may be present in NTN cells. The terminal may also distinguish whether a current cell is a TN cell or an NTN cell through presence or absence of the SIB19. Table 8 may represent information of the SIB19. As an example, Table 8 below may be the SIB 19 presented based on 3GPP Release 17, but is not limited to Release 17 and may be applied to other releases.

[Table 8]

```
-- ASN1START
-- TAG-SIB19-START

SIB19-r17 ::= SEQUENCE {
        ntn-Config-r17      NTN-Config-r17                      OPTIONAL,      -- Need R
        t-Service-r17       INTEGER (0..549755813887)           OPTIONAL,      -- Need R
        referenceLocation-r17       ReferenceLocation-r17       OPTIONAL,      -- Need R
        distanceThresh-r17          INTEGER(0..65525)           OPTIONAL,      -- Need R
        ntn-NeighCellConfigList-r17         NTN-NeighCellConfigList-r17
                                                                OPTIONAL,      -- Need R
        lateNonCriticalExtension    OCTET STRING  OPTIONAL,

        ...,
        [[
        ntn-NeighCellConfigListExt-v1720    NTN-NeighCellConfigList-r17        OPTIONAL
                                                                               -- Need R

        ]]
}


NTN-NeighCellConfigList-r17   ::=   SEQUENCE   (SIZE(1..maxCellNTN-r17))   OF   NTN-
NeighCellConfig-r17
```

```
NTN-NeighCellConfig-r17 ::= SEQUENCE {
        ntn-Config-r17      NTN-Config-r17   OPTIONAL,      -- Need R
        carrierFreq-r17     ARFCN-ValueNR OPTIONAL,         -- Need R
        physCellId-r17      PhysCellId       OPTIONAL       -- Need R
}

-- TAG-SIB19-STOP
-- ASN1STOP
```

In the 3GPP NTN cell, the terminal may receive the SIB19 as above from the satellite. The description on the respective fields in Table 8 may as described in Table 9.

[Table 9]

| |
|---|
| - *t-Service:* indicates time information on when a service of a current cell, which is an NTN quasi-Earth-fixed cell, is going to stop. In other words, *t-Service* may indicate cell stop time which is an end time of a service of a serving cell. The end time of the service of the serving cell may be used for time-based measurement initiation of a terminal in the idle mode or inactive mode. The time-based measurement initiation may refer to an operation of the terminal to initiate measurement on neighboring cells before the received end time of the service of the serving cell.<br><br>- *referenceLocation:* indicates a reference location of the serving cell, when the serving cell is an NTN quasi-Earth-fixed cell (also NTN Earth-moving cell in case of 3GPP Release 18). The reference location of the serving cell may be used for location-based measurement initiation of a terminal in the idle mode or inactive mode. The location-based measurement initiation may refer to an operation of the terminal to initiate measurement on neighboring cells before the terminal moves away from the reference location of the serving cell by a threshold distance.<br><br>- *distanceThresh:* indicates the threshold distance required for the location-based measurement initiation of the terminal. The terminal in idle mode or inactive mode may initiate measurement on neighboring cells before the terminal moves away from the reference location by the threshold distance.<br><br>- *ntn-NeighCellConfigList:* provides a non-terrestrial network neighboring cell configuration list consisting of *maxCellNTN* non-terrestrial network cell configuration information elements (IEs) (i.e. *NTN-Config*). *maxCellNTN* may be a value configured by the base station. Each of the non-terrestrial network cell configurations in the list may be a non-<br>terrestrial network cell configuration of a neighboring cell of the current cell. *maxCellNTN* may be the maximum number of non-terrestrial network cells and may be a positive integer.<br><br>- *NTN-Config:* may be an IE configured as shown in Table 10 below, and each field thereof may be as shown in Table 11. |

As an example, referring to Table 9, the NTN-related SIB may include *NTN-config* as NTN configuration information, and *NTN-config* may be an information element (IE) configured as shown in Table 10 below, and the respective fields thereof may be as shown in Table 11.

[Table 10]

```
-- ASN1START
-- TAG-NTN-CONFIG-START

NTN-Config-r17 ::=          SEQUENCE {
    epochTime-r17           EpochTime-r17                   OPTIONAL,  -- Need R
    ntn-UlSyncValidityDuration-r17 ENUMERATED{ s5, s10, s15, s20, s25, s30, s35,
                      s40, s45, s50, s55, s60, s120, s180, s240, s900}  OPTIONAL,  -- Cond SIB19
    cellSpecificKoffset-r17  INTEGER(1..1023)                OPTIONAL,  -- Need R
    kmac-r17                INTEGER(1..512)                 OPTIONAL, -- Need R
    ta-Info-r17             TA-Info-r17                     OPTIONAL,  -- Need R
    ntn-PolarizationDL-r17   ENUMERATED {rhcp,lhcp,linear}   OPTIONAL,  -- Need R
    ntn-PolarizationUL-r17   ENUMERATED {rhcp,lhcp,linear}   OPTIONAL,  -- Need R
    ephemerisInfo-r17        EphemerisInfo-r17              OPTIONAL,  -- Need R
    ta-Report-r17           ENUMERATED {enabled}            OPTIONAL,  -- Need R
    ...
}


EpochTime-r17 ::=          SEQUENCE {
    sfn-r17                 INTEGER(0..1023),
    subFrameNR-r17          INTEGER(0..9)
}


TA-Info-r17 ::=            SEQUENCE  {
    ta-Common-r17           INTEGER(0..66485757),
    ta-CommonDrift-r17      INTEGER(-257303..257303)        OPTIONAL,  -- Need R
    ta-CommonDriftVariant-r17    INTEGER(0..28949)          OPTIONAL  -- Need R
}
-- TAG-NTN-CONFIG-STOP
-- ASN1STOP
```

The description on the respective fields in Table 10 may be as shown in Table 11 below.

[Table 11]

- *epochTime* field: provides an epoch time of NTN assistance information.
- *ntn-UlSyncValidityDuration* field: provides an uplink synchronization validity duration.
- *cellSpecificKoffset* field: provides a cell-specific scheduling offset. Here, the cell-specific scheduling offset may be a scheduling offset value used for the modified timing relationship in NTN. The cell-specific scheduling offset field may be omitted, in which case the terminal may assume the cell-specific scheduling offset to be 0.
- *kmac* field: provides a network scheduling offset value provided by the network when the downlink and uplink frame timing are not aligned at the base station. If the *kmac* field is omitted, the terminal may assume the network scheduling offset value to be 0.
- *ta-Info* field: provides the uplink TA information that the terminal uses to pre-compensate the uplink timing. Using the satellite ephemeris information (*ephemerisInfo*), the epoch time (*epochTime*), and the current time held by the terminal, the terminal may estimate the common TA in the NTN at time t using a Taylor approximation as in Equation 6. Here, the epoch time may be an epoch time when *ta-Info* is received.
- *ntn-PolarizationDL* field and *ntn-PolarizationUL* field: may each be fields that provide polarization information for the service downlink and uplink, respectively.

(continued)

> - *ephemerisInfo* field: provides satellite ephemeris in form of a position and velocity state vector or orbital parameters. The IE of *ephemerisInfo* may be as shown in Table 12. A value tag of SIB1 may not change due to the change in *ephemerisInfo*.
> - *ta-Report* field may not be omitted, and if included, it may be a field that provides the activation (enabling) of TA reporting during random access caused by RRC connection establishment or RRC connection resume.

Referring to Table 11, the NTN assistance information may refer to information related to serving and/or neighboring satellite ephemeris, uplink TA information, etc. The NTN assistance information may be *NTN-Config* or information in SIB19 which includes *NTN-Config*. In other words, the epoch time may be information on a time at which *NTN-Config* is provided through SIB or dedicated signaling. Therefore, the epoch time may change each time the terminal receives the NTN assistance information. However, a value tag of SIB1 may not change due to the change in the epoch time.

Referring to Table 11, the uplink synchronization validity duration may refer to the maximum time duration from the epoch time during which the terminal can apply the assistance information without acquiring new assistance information. The uplink synchronization validity duration may be updated only when one or more of the epoch time, uplink TA, or satellite ephemeris are updated. However, a value tag of SIB1 may not change due to the change in the uplink synchronization validity duration. The satellite ephemeris information may be denoted as *ephemerisInfo.* Additionally, the uplink TA information may be denoted as *ta-Info.* Referring to Table 11, common TA may be a value determined by Equation 6 below. Here, t may be a real number.

$$\text{common TA} = \{\text{ta-Common-r17} / 2 + \text{ta-CommonDrift-r17} / 2 \times (t - \text{epoch time}) + \text{ta-CommonDriftVariant} \times (t - \text{epoch time})^2 \}/2 \qquad \text{[Equation 6]}$$

In addition, as an example, *ephemerisInfo,* as orbit-related information included in *NTN-config,* may include satellite ephemeris information in a position and velocity state vector format or an orbit parameter format, which are as shown in Table 12.

[Table 12]

```
-- ASN1START
-- TAG-EPHEMERISINFO-START

EphemerisInfo-r17 ::=      CHOICE {
        positionVelocity-r17      PositionVelocity-r17,
        orbital-r17               Orbital-r17
}

PositionVelocity-r17 ::=   SEQUENCE {
        positionX-r17             PositionStateVector-r17,
        positionY-r17             PositionStateVector-r17,
        positionZ-r17             PositionStateVector-r17,
        velocityVX-r17            VelocityStateVector-r17,
        velocityVY-r17            VelocityStateVector-r17,
```

```
        velocityVZ-r17              VelocityStateVector-r17
}

Orbital-r17 ::=            SEQUENCE {
        semiMajorAxis-r17          INTEGER (0..8589934591),
        eccentricity-r17           INTEGER (0..1048575),
        periapsis-r17              INTEGER (0..268435455),
        longitude-r17              INTEGER (0..268435455),
        inclination-r17            INTEGER (-67108864..67108863),
        meanAnomaly-r17            INTEGER (0..268435455)
}


PositionStateVector-r17 ::= INTEGER (-33554432..33554431)


VelocityStateVector-r17 ::= INTEGER (-131072..131071)


-- TAG-EPHEMERISINFO-STOP
-- ASN1STOP
```

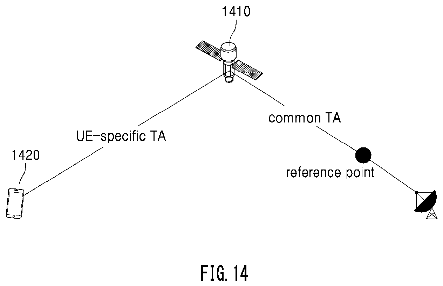

FIG. 14 is a conceptual diagram illustrating a first exemplary embodiment of a reference point, common TA, and UE-specific TA.

Referring to FIG. 14, a common TA may be a TA related to a time delay between a reference point and a satellite 1410 and may be common to all terminals within a cell. A UE-specific TA may be a TA related to a time delay between the satellite 1410 and a terminal 1420 and may be a value that may be different for each terminal within the cell. Here, the reference point may be a point where a downlink frame and an uplink frame are aligned.

The above-mentioned pre-compensation may mean that the terminal derives a part of the uplink TA in an open loop scheme, and the terminal may determine the uplink TA as in Equation 7 below.

[Equation 7]

$$\text{Uplink TA} = (N_{TA} + N_{TA,\,offset}) \times Tc + (\text{common TA} + \text{UE-specific TA})$$

Here, $N_{TA}$ is a TA obtained in a closed-loop scheme and may be a TA updated by a TA command MAC CE. $N_{TA,\,offset}$ may be a value determined by a used frequency and duplex scheme. The remaining common TA and UE-specific TA may be values derived from assistance information in system information received by the terminal through an open loop scheme and location information and time information possessed by the terminal. The terminal's derivation of the common TA and the UE-specific TA may be referred to as pre-compensation.

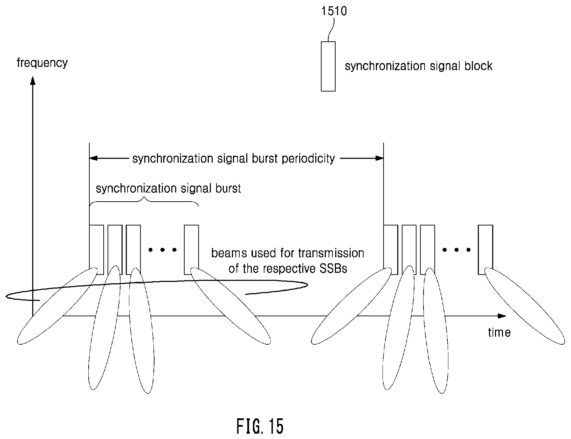

FIG. 15 is a conceptual diagram illustrating SSBs and a beam sweeping operation in a wireless communication system.

Referring to FIG. 15, a method for selecting a downlink beam when a terminal communicates with a base station may be considered. For example, the terminal and the base station may determine a downlink beam for communication. Here, initial selection of a downlink beam may be performed during a random access procedure for initial access that the terminal performs to access the base station. The terminal may select a downlink beam during the random access procedure.

The base station (e.g. gNB) may transmit SSB(s) 1510 to the terminal through beams that sweep within a synchronization signal burst (i.e. SSB burst). The terminal may select a beam used for downlink transmission based on the SSB(s) 1510 transmitted by the base station. Specifically, one SSB may be a resource unit used to transmit a synchronization signal used for acquiring downlink synchronization. Here, beam directions used for synchronization transmissions in the respective SSBs within one SSB burst may be different.

Each beam swept by the base station may be allocated to each SSB within one SSB burst. The terminal may select an optimal SSB (e.g. SSB with the largest reference signal received power (RSRP) estimated from a synchronization signal of the SSB) among the SSBs within the SSB burst. Then, the terminal may transmit a random access message (e.g. Msg1) to the base station using a random access resource (e.g. random access channel occasion (RACH occasion)) associated with the selected SSB.

The base station may receive Msg1, and the base station may identify the resource (e.g. RACH occasion) in which Msg1 is received. Specifically, the base station may identify which frequency-time resource is used for transmission of Msg1 of the terminal, and through this, may recognize the beam selected by the terminal. Here, one random access resource (e.g. RACH occasion) is associated with a specific beam, and the base station may recognize the associated beam by identifying the resource (e.g. RACH occasion) in which Msg1 is received.

The base station may transmit Msg2 to the terminal in response to Msg1. Here, the base station may transmit Msg2 to the terminal using the downlink beam recognized through the resource (e.g. RACH occasion) in which Msg1 is received. In addition, the base station may transmit a downlink signal transmitted to the terminal after Msg2 through the downlink beam selected as described above.

There may be limitations in that the wireless communication system operating as described above supports the unchanged PCI satellite switching scenario for a terminal in the NTN. Specifically, it may be difficult for the terminal to support the unchanged PCI satellite switching scenario due to terminal operations based on the existing 3GPP NTN specifications.

Referring again to FIG. 10, in the existing wireless communication system, a satellite providing services to a terminal in the connected mode may be switched from a first satellite to a second satellite. As satellite switching occurs from the first satellite to the second satellite, an uplink TA may be changed. For example, in L3 handover or L3 conditional handover, the terminal may pre-compensate for an uplink TA for a neighboring cell that is a handover target. A reason why such pre-compensation is possible may be because the terminal receives a configuration IE of the neighbor cell (i.e. *NTN-NeighCellConfig* IE) in an NTN neighbor cell configuration list within the SIB19 of the current cell to which the terminal is connected.

On the other hand, the unchanged PCI satellite switching method may not be L3 handover or conditional handover. Therefore, in the existing wireless communication system, the terminal may not perform any procedures related to L3 handover or L3 conditional handover even if the communication service of the first satellite is stopped under the unchanged PCI satellite switching scenario. In other words, this means that the pre-compensation in the terminal should use the values received from the first satellite that is the source base station before being switched, until the terminal receives the SIB19 again from the second satellite after the terminal switches from the first satellite to the second satellite.

In the above-described situation, the terminal may perform the pre-compensation based on the NTN-related information received from the source satellite. Accordingly, until new NTN-related system information is received from the target satellite (i.e. second satellite) after satellite switching, the terminal may operate based on the existing common TA and UE-specific TA, which do not match the target satellite (i.e. second satellite). In addition, since the terminal uses the cell-specific $K_{offset}$, $K_{mac}$, and other NTN-related field values that are obtained from the source satellite, the terminal may use values that do not match the target satellite until new NTN-related system information is obtained from the second satellite. In other words, if the terminal operating based on the existing wireless communication system switches satellites based on the unchanged PCI satellite switching scenario, uplink transmission performance may significantly deteriorate or uplink transmission may be impossible due to the incorrect TA related values.

Hereinafter, operation methods in the unchanged PCI satellite switching scenario will be described in consideration of the above-described problems. As an example, based on the unchanged PCI satellite switching scenario, the terminal may obtain system information for communicating with the base station via the target satellite immediately after the satellite switching, from the source satellite before the satellite switching. As an example, the system information needed for the terminal to communicate with the base station via the target satellite may be referred to as 'system information needed for the terminal immediately after switching (post-switching necessary SI)'. As another example, the system information needed for the terminal to communicate with the base station via the target satellite may be referred to as 'satellite switching-related application information'.

Here, the post-switching necessary SI may refer to the system information required when the terminal switches to the target satellite based on satellite switching and subsequently communicates with the base station via the target satellite, without being limited to the specific name. It may also be possible to use a different name. However, in the following, for convenience of description, the above-described system information may be referred to as 'system information needed for the terminal immediately after switching (or 'post-switching necessary SI".

The post-switching necessary SI may be information needed for TA pre-compensation related to the target satellite. The terminal may receive the post-switching necessary SI through a service link provided by the source satellite before switching. Specifically, since the terminal needs to communicate with the base station through a service link provided by the target satellite immediately after satellite switching, the post-switching necessary SI may be obtained through the service link provided by the source satellite before satellite switching. Here, the post-switching necessary SI may include the TA pre-compensation information described above.

As an example, the base station may periodically broadcast SIBs including system information. The terminal may receive an SIB from the base station and obtain the post-switching necessary SI. As another example, the terminal may request necessary system information from the base station. The base station may receive a request for system information from the terminal and transmit the post-switching necessary SI. The terminal may receive the post-switching necessary SI from the base station. The terminal may obtain the post-switching necessary SI based on at least one of the above-described methods, without being limited to a specific form.

As an example, the post-switching necessary SI may be included in one SIB. As an example, the post-switching necessary SI may be transmitted to the terminal as being included in the NTN-related SIB (e.g. SIB 19). As another example, the post-switching necessary SI may be divided into multiple SIBs, without being limited to a specific form.

The post-switching necessary SI may be information included in the SIB(s). Alternatively, the post-switching necessary SI may be information configured separately from the SIB(s). As an example, the post-switching necessary SI may be indicated through an indicator in a specific SIB. Here, the indicator in the specific SIB may indicate which cell information in the neighboring cell list includes the post-switching necessary SI. As an example, the indicator indicating which cell information in the neighboring cell list includes the post-switching necessary SI may be one field or IE in the specific SIB. As a specific example, the indicator may indicate a PCI of a neighboring cell in the neighboring cell list. As an example, the PCI may be *physCellId.*

As another example, the indicator may indicate a neighboring cell based on a neighboring cell index for the neighboring cell list. Here, the index may be one of integer values 1, 2. ...., and *maxCellNTN.* As an example, the neighboring cell list may be *NTN-NeighCellConfigList* or *NTN-NeighCellConfigListExt,* without being limited thereto.

In other words, the indicator in the specific SIB may indicate a specific neighboring cell in the neighboring cell list. Here, the entire information on one neighboring cell indicated by the indicator in the specific SIB may be the post-switching necessary SI. As another example, some of the information on one neighboring cell indicated by the indicator in the specific SIB may be the post-switching necessary SI, without being limited to a specific form.

In addition, as an example, the above-described indicator may be included in the SIB only in the above-described unchanged PCI satellite switching scenario. Therefore, the terminal may recognize the operation based on the unchanged PCI satellite switching scenario in the NTN system based on whether the indicator is included in the specific SIB. As an example, the SIB may be the NTN-related SIB. As a more specific example, the SIB may be the SIB 19. In other words, if the NTN-related SIB includes the corresponding indicator, the terminal may recognize that the NTN system operates based on the unchanged PCI satellite switching scenario. On the other hand, if the NTN-related SIB does not include the corresponding indicator, the terminal may recognize that the NTN system operates based on a scenario other than the unchanged PCI satellite switching scenario. In other words, whether the NTN system operates based on the unchanged PCI satellite switching scenario may be implicitly indicated depending on whether the corresponding indicator is included in the NTN-related SIB.

As another example, the post-switching necessary SI may be independently configured within a specific SIB. As an example, the specific SIB may be the NTN-related SIB. As a more specific example, the specific SIB may be the SIB 19, without being limited thereto. Here, the terminal may recognize that the NTN system operates based on the unchanged PCI satellite switching scenario based on whether the post-switching necessary SI is included in the NTN-related SIB. As an example, the specific SIB may be the NTN-related SIB. As a more specific example, the specific SIB may be the SIB 19. In other words, the terminal may recognize that the NTN system operates based on the unchanged PCI satellite switching scenario if the NTN-related SIB includes the post-switching necessary SI, which is independently configured. On the other hand, if the post-switching necessary SI is not included in the NTN-related SIB, which is independently configured, the terminal may recognize that the NTN system operates based on a scenario other than the unchanged PCI satellite switching scenario. In other words, whether the NTN system operates based on the unchanged PCI satellite switching scenario may be implicitly indicated depending on whether the corresponding indicator is included in the NTN-related SIB.

As an example, the post-switching necessary SI may be indicated through an indicator included in the SIB. The indicator may indicate that the post-switching necessary SI is included in one cell information included in the neighboring cell list in the corresponding SIB.

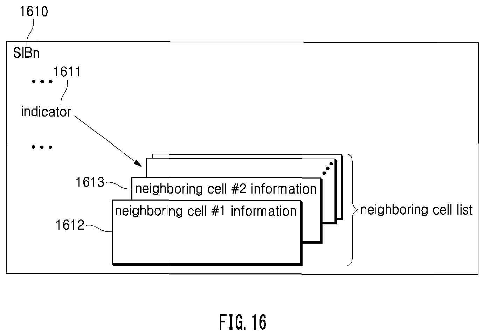

FIG. 16 is a conceptual diagram illustrating a first exemplary embodiment of a method for indicating necessary system information using an indicator included in an SIB.

Referring to FIG. 16, an SIB 1610 may include an indicator 1611 indicating the post-switching necessary SI. Specifically, the indicator 1611 may indicate that the post-switching necessary SI is included in one cell information 1612, 1613, or the like included in a neighboring cell list within the SIB 1610. As an example, n in 'SIBn' may be an integer representing an index of the SIB.

The indicator may indicate which cell information in the neighboring cell list within the same SIB includes the post-switching necessary SI. As a specific example, in FIG. 16, the SIBn 1610 may be the SIB 19. In other words, the terminal may recognize, through the indicator included in the same SIB, that one cell information included in the neighboring cell list includes the post-switching necessary SI.

Here, the terminal may receive the SIBn 1610 before switching through a service link of a source satellite. In other words, the terminal may receive the post-switching necessary SI through the service link of the source satellite before switching. Specifically, the terminal may receive the SIBn before switching. The terminal may identify the indicator in the SIBn and identify specific neighboring cell information indicated by the indicator from the neighboring cell list. The terminal may determine that all or part of the identified specific neighboring cell information is the post-switching necessary SI. As another example, the post-switching necessary SI may be indicated through an indicator included in the SIB.

The indicator may indicate that the post-switching necessary SI is included in one cell information of a neighboring cell list included in another SIB that is different from the corresponding SIB.

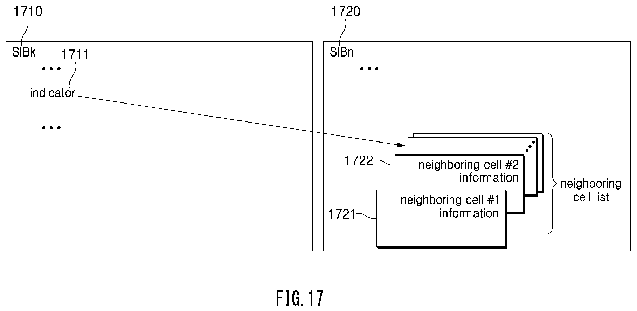

FIG. 17 is a conceptual diagram illustrating a second exemplary embodiment of a method for indicating necessary system information using an indicator included in an SIB.

Referring to FIG. 17, an indicator 1711 indicating the post-switching necessary SI may be included in a first SIB (SIBk) 1710. Here, a second SIB (SIBn) 1720 may include information of a neighboring cell list, and the indicator 1711 included in the first SIB 1710 may indicate that the post-switching necessary SI is included in one cell information of the neighboring cell list (list of cells 1721, 1722, ...., and the like) included in the second SIB 1720. For example, n and k in 'SIBn' and 'SIBk' may be integers representing SIB indexes and may be different values. In other words, the indicator may indicate whether the post-switching necessary SI is included in one cell information of the neighboring cell list in the SIB other than the SIB including the indicator.

Specifically, the terminal may receive the SIBk and SIBn before switching. In other words, the terminal may receive the SIBk and SIBn through a service link of a source satellite before switching. Here, the SIBk may be an SIB associated with the SIBn including the most recent neighboring cell list. The terminal may identify the indicator in the SIBk and may identify specific neighboring cell information indicated by the indicator from the neighboring cell list in the SIBn. The terminal may obtain all or part of the identified specific neighboring cell information as the post-switching necessary SI. As another example, the post-switching necessary SI may be configured independently within the SIB. In other words, the post-switching necessary SI may not be indicated through the above-described indicator, and may be configured independently.

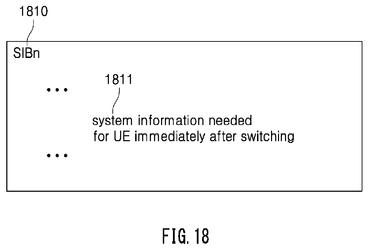

FIG. 18 is a conceptual diagram illustrating a first exemplary embodiment of a method for independently providing system information needed immediately after switching within an SIB.

Referring to FIG. 18, an SIBn 1810 may include the post-switching necessary SI 1811. In the diagram, n in 'SIBn' may be an integer representing an index of the SIB. In other words, the post-switching necessary SI may not be indicated by an indicator, and may be configured separately within the corresponding SIB. For example, the post-switching necessary SI 1811 may be information needed for TA pre-compensation for a target satellite. Therefore, the post-switching necessary SI 1811 may be composed of one or more fields within the SIBn. Alternatively, the post-switching necessary SI 1811 may be an information element (IE) within the SIBn, without being limited to a specific exemplary embodiment.

The terminal may receive the SIBn through a service link of a source satellite before switching. Then, the terminal may identify the post-switching necessary SI 1811 within the SIBn, and apply the identified the post-switching necessary SI 1811. Also, as an example, the post-switching necessary SI may be included in the SIB in the unchanged PCI satellite switching scenario described above. Here, the SIB may be the NTN-related SIB. In other words, the terminal may identify whether the NTN system operates based on the unchanged PCI satellite switching scenario depending on whether the post-switching necessary SI exists in the NTN-related SIB. Specifically, the terminal may recognize that the NTN system operates based on the unchanged PCI satellite switching scenario if the post-switching necessary SI exists in the NTN-related SIB. On the other hand, the terminal may recognize that the NTN system operates based on a different scenario if the post-switching necessary SI does not exist in the NTN-related SIB.

As an example, the post-switching necessary SI may be NTN configuration information (e.g. *NTN-config*) composed of values for the target satellite. As another example, the post-switching necessary SI may be some fields of the NTN configuration information (e.g. *NTN-config*) or an IE composed of some fields of the NTN configuration information (e.g. *NTN-config*). Here, some of the fields described above may be values for the target satellite. As a specific example, some fields of the NTN configuration information (e.g. *NTN-config*) may include fields exemplified Table 13 as information necessary for TA pre-compensation for the target satellite. Specifically, some fields of the NTN configuration information (e.g. *NTN-config*) include an *epochTime* field which provides information on an epoch time, a *ta-info* field which provides TA-related information, and an *ephemerisInfo* field which provides ephemeris-related information.

[Table 13]

| |
|---|
| *epochTime* |
| *ta-info* |
| *ephemerisInfo* |

In addition, some fields of the NTN configuration information (e.g. *NTN-config*) may include fields exemplified in Table 14 as fields including one or more information among fields of the NTN configuration information (e.g. *NTN-config*). Specifically, some fields of the NTN configuration information (e.g. *NTN-config*) may include an *ntn-UlSyncValidityDuration* field which provides uplink synchronization valid duration information in the NTN, a *cellSpecificKoffset* field which provides a cell-specific $K_{offsec}$, a kmac field which provides $K_{mac}$ information, a *ta-Report* field which provides TA reporting information, an *ntn-PolarizationDL* field or *ntn-PolarizationUL* field which provides polarization information of NTN, and the like.

[Table 14]

| ntn-UlSyncValidityDuration |
|---|
| cellSpecificKoffset |
| kmac |
| ta-Report |
| ntn-PolarizationDL, ntn-PolarizationUL |

In other words, the post-switching necessary SI may include at least one of Table 13 or Table 14 as the NTN configuration information (e.g. *NTN-config*) related to the target satellite, or some fields of the NTN configuration information (e.g. *NTN-config*), without being limited to a specific form.

Here, the post-switching necessary SI may further include information of Table 15 as the NTN configuration information (e.g. *NTN-config*) related to the target satellite, or some fields of the NTN configuration information (e.g. *NTN-config*), in relation to at least one of Table 13 or Table 14. As an example, Table 15 may be information on a start time or a time length related to satellite switching. In other words, the post-switching necessary SI may further include time information related to satellite switching.

[Table 15]

| - A time at which the communication service of the source satellite is stopped |
|---|
| This time may be referred to as *t-Service.* |
| - A time at which the communication service of the target satellite starts |
| This time may be referred to as *t-Start.* |
| - A difference between the time at which the communication service of the target satellite starts and the time at which the communication service of the source satellite is stopped |
| This time period may be referred to as *t-Gap.* |

As an example, the terminal may apply the post-switching necessary SI immediately after switching to the target satellite, and perform operations and updates based on the post-switching necessary SI. Here, the post-switching necessary SI may include *ntn-UlSyncValidityDuration* as shown in Table 14 above, and *ntn-UlSyncValidityDuration* may also be applied to the terminal when the communication service of the target satellite starts immediately after switching to the target satellite. As an example, *ntn-UlSyncValidityDuration* may indicate a period during which uplink synchronization is valid in the NTN system, and a timer may operate based on this. Accordingly, the terminal may start the timer according to *ntn-UlSyncValidityDuration* when the communication service of the target satellite starts immediately after switching to the target satellite, without being limited to the specific exemplary embodiment.

As described above, the terminal may operate based on the unchanged PCI satellite switching scenario in the NTN system. Here, unchanged PCI satellite switching may be performed based on hard satellite switching or soft satellite switching in the satellite switching scenario of the quasi-Earth-fixed cell. The unchanged PCI satellite switching scenario may be one in which the source satellite and the target satellite are connected to the same base station, using the same PCI before and after switching, and the same SSB frequency is used before and after switching, as shown in Table 7 above. The terminal may need to recognize whether the system is operating in the unchanged PCI satellite switching scenario in order to support system operations according to the unchanged PCI satellite switching scenario.

Specifically, the terminal may recognize the unchanged PCI satellite switching scenario through the presence or absence of an indicator indicating the post-switching necessary SI. In other words, when it is indicated using the indicator included in the same SIB based on FIG. 16 that the post-switching necessary SI is included in one cell information in the neighboring cell list, or when it is indicated using the indicator included in another SIB based on FIG. 17 that the post-switching necessary SI is included in one cell information in the neighboring cell list, the terminal may identify presence of the indicator, and recognize that the NTN system operates based on the unchanged PCI satellite switching scenario.

As another example, based on the above-described FIG. 18, the terminal may recognize that the NTN system operates based on the unchanged PCI satellite switching scenario when the post-switching necessary SI is configured independently within the SIB. In other words, the terminal may recognize that the NTN system operates based on the unchanged PCI satellite switching scenario based on whether the post-switching necessary SI exists within the SIB.

As another example, the terminal may recognize that the NTN system operates based on the unchanged PCI satellite switching scenario based on presence of a *t-Gap* field related to a start time of the communication service of the target satellite. As another example, the terminal may recognize that the NTN system operates based on the unchanged PCI satellite switching scenario based on presence of a *t-Start* field related to a start time of the communication service of the target satellite.

As an example, recognizing that the NTN system operates based on the unchanged PCI satellite switching scenario may mean that the terminal recognizes in advance that satellite switching is performed based on hard satellite switching or soft satellite switching, and the terminal may perform operations corresponding to the recognition.

For example, when hard satellite switching is performed, the terminal may stop the communication service provided by the source satellite and then connect to the service link of the target satellite. In other words, the terminal may not be connected to two satellites at the same time. Here, since TA may have different values before and after satellite switching, smooth communication may not be performed if the TA is not recognized. Therefore, the terminal may need to stop uplink transmission when the provision of the communication service by the source satellite ends, and for this, the terminal may need to recognize an end time of the provision of the communication service by the source satellite.

Specifically, the terminal may recognize that satellite switching occurs according to the unchanged PCI satellite switching scenario based on the above, but the method for the terminal to recognize the unchanged PCI satellite switching scenario may not be limited to what is described above. Then, the terminal may receive, from the source satellite, information on a time at which provision of the communication service of the source satellite is stopped. As an example, the end time of the communication service of the source satellite may be a time designated by *t-service,* but may not be limited thereto. The terminal may recognize the end time of the source satellite's communication service as described above.

As another example, the terminal may recognize that satellite switching occurs according to the unchanged PCI satellite switching scenario based on the above, but the method for the terminal to recognize the unchanged PCI satellite switching scenario is not limited to what is described above. Then, the terminal may receive, via the source satellite, information on a time at which the ephemeris of the source satellite and other assistance information of the source satellite are obtained. Here, the time at which the ephemeris of the source satellite and other assistance information of the source satellite are obtained may be a time specified by *epochTime,* without being limited thereto. The terminal may receive information on a length of validity duration through the service link of the source satellite based on the time at which the ephemeris of the source satellite and other assistance information of the source satellite are obtained. As an example, the length of validity duration may be a time indicated by *ntn-UlSyncValidityDuration,* without being limited thereto. The terminal may recognize that the communication service of the source satellite is stopped when the validity duration elapses from the time at which the ephemeris of the source satellite and other assistance information of the source satellite are obtained. In other words, the terminal may recognize the end time of the communication service of the source satellite. As a specific example, the terminal may recognize the end time of the communication service of the source satellite based on (time specified by *epochTime* + time duration specified by *ntn-UlSyncValidityDuration*), without being limited to the exemplary embodiment..

The satellite switching based on the unchanged PCI satellite switching scenario may be hard satellite switching, as described above. Accordingly, a time period may occur in which the terminal cannot use both the service link of the source satellite and the service link of the target satellite, and this time period may be a time required for satellite switching. However, the name is only for convenience of description and may not be limited to the specific name. In the following, for convenience of description, it will be referred to as 'satellite switching time'.

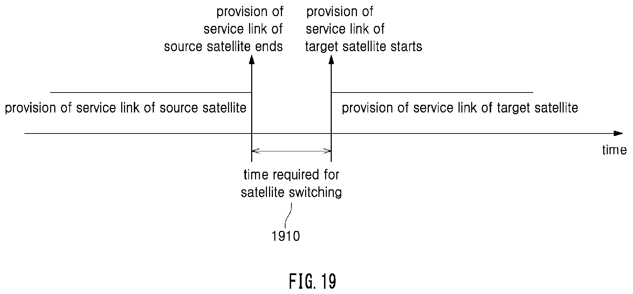

FIG. 19 is a conceptual diagram illustrating a first exemplary embodiment of a satellite switching time based on hard satellite switching.

Referring to FIG. 19, the terminal may be unable to communicate with the base station during a satellite switching time 1910. In addition, when a communication service is provided by a target satellite, the terminal may apply pre-compensation to a TA related to the target satellite when performing uplink transmission. Considering the above, the terminal may need to recognize a start time and an end time of the satellite switching time 1910. In other words, the terminal may need to recognize a time at which a communication service of the source satellite ends and a time at which the communication service of the target satellite starts. Here, the terminal may identify the start time of the satellite switching time 1910 (i.e. the end time of the source satellite's communication service) by recognizing the end time of the source satellite's communication service described above, but it may not be limited to the specific exemplary embodiment.

In addition, the terminal may also need to recognize the end time of the satellite switching time 1910 (i.e. the start time of the communication service of the target satellite). Specifically, based on the above, the terminal may recognize that the NTN system operates based on the unchanged PCI satellite switching scenario and recognize the end time of the source satellite's communication service.

Here, the terminal may receive information on *t-gap,* which is defined as the satellite switching time, through a service link provided by the source satellite. The terminal may recognize (time at which the communication service of the source satellite ends + *t-Gap*) as the satellite switching time. In other words, the terminal may recognize the start time of the target satellite's communication service. As another example, the terminal may recognize that the NTN system operates based on the unchanged PCI satellite switching scenario. Here, the terminal may receive information on *t-Start,* which is defined as the start time of the communication service of the target satellite, through the service link of the source satellite, and may recognize the start time of the communication service of the target satellite based thereon.

As another example, the terminal may recognize that the NTN system operates based on the unchanged PCI satellite switching scenario. Here, if information on *t-Gap* or *t-Start* does not exist in system information that the terminal obtains from the service link provided by the source satellite, the terminal may recognize the time at which provision of the communication service of the source satellite ends as the start time of the target satellite's communication service. In other words, if there is no information indicating the start time of the communication service of the target satellite, the terminal may recognize the end time of the communication service of the source satellite as the start time of the communication service of the target satellite. Here, the terminal may obtain information on *t-Gap* or *t-Start* from the base station. As an example, information on *t-Gap* or *t-Start* may be included in the post-switching necessary SI, and may be as shown in Table 15. As an example, the terminal may receive the post-switching necessary SI through the service link of the source satellite before satellite switching, and information on *t-Gap* or *t-Start* may also be received through the service link of the source satellite before satellite switching.

When satellite switching occurs according to the unchanged PCI satellite switching scenario, the terminal may be provided with the service link of the target satellite after the communication service of the source satellite ends and perform communication with the base station, as described above. Here, the terminal may receive the post-switching necessary SI through the service link of the source satellite until the provision of the communication service by the source satellite ends. The terminal may recognize whether the unchanged PCI satellite switching scenario is applied through the received the post-switching necessary SI, as described above.

The terminal may update system information related to the target satellite using the post-switching necessary SI, which is received before satellite switching, from the start time of the target satellite's communication service. Specifically, after satellite switching, the terminal may update some or all of the information in Table 16 using the post-switching necessary SI. In other words, the terminal may update information related to the target satellite, which is obtained through the service link of the source satellite, after provision of the target satellite's communication service starts.

[Table 16]

- All or part of *NTN-Config*
In other words, all or part of *epochTime, ntn-UlSyncValidityDuration, cellSpecificKoffset, kmac, ta-info, ntn-PolarizationDL, ntn-PolarizationUL, ephmerisInfo,* or *ta-Report*
- *t-Service*
- *referenceLocation*
- *distanceThresh*
- *ntn-NeighCellConfigList*
- *ntn-NeighCellConfigListExt*

Specifically, the terminal may determine a pre-compensated TA in relation to the target satellite using the post-switching necessary SI, and apply the pre-compensated TA to communication with the base station from the start of provision of the communication service of the target satellite. Therefore, the terminal may not perform a separate random access procedure to communicate with the base station from the start time of the communication service of the target satellite. For example, the random access procedure may be a random access procedure performed by the terminal to align an uplink TA for communication with the base station after the start of the communication service of the target satellite, but may not be limited thereto.

In other words, the terminal may not perform a separate random access procedure when performing satellite switching from the source satellite to the target satellite, and through this, a RACH congestion problem due to RA procedures can be solved. More specifically, the terminal may be able to perform uplink transmission to the base station if the terminal recognizes the pre-compensated TA related to the target satellite, even when it does not perform a random access procedure immediately after satellite switching. Therefore, the terminal may not perform a procedure for TA alignment based on random access.

The random access procedure may be a procedure to identify an optimal uplink TA and apply it to uplink transmission, but if pre-compensation of a TA is possible, uplink transmission to the target satellite may be possible without the random access procedure. Then, the terminal may align the TA within a TA error range through communication with the base station. Specifically, the terminal may transmit an uplink signal (e.g. sounding reference signal (SRS)) to the base station, and the base station may correct the TA based on a received signal and indicate the corrected TA to the terminal. As an example, the corrected TA may be indicated using a TA command (TAC) MAC CE. The terminal may correct the TA based on the information on the corrected TA from the base station, and through this, can perform smooth communication through the target satellite.

As another example, the terminal may expire a timer indicating validity of system information when performing satellite switching. Here, if the timer indicating validity of system information expires (or stops), the terminal may recognize that uplink synchronization is lost. For example, if the terminal switches to the target satellite, the existing system information may no longer be used, so the timer indicating validity of the system information may expire when the terminal switches to the target satellite. In other words, the terminal may stop the timer indicating validity of the system information when performing satellite switching. As a specific example, the timer may be a T430 timer defined in the 3GPP specifications, without not being limited to thereto. For example, a time at which the terminal expires (or stops) the timer indicating validity of system information based on satellite switching may be a time at which provision of the communication service of the source satellite ends. As another example, the time at which the terminal expires (or stops) the timer indicating validity of system information based on satellite switching may be the start time of the communication service of the target satellite, without being limited thereto.

As an example, if the timer indicating validity of system information expires (or is stopped), the terminal may suspend uplink transmission in progress at the end time of the source satellite's communication service. Afterwards, the terminal may resume the suspend uplink transmission at the start time of the target satellite's communication service. As a specific example, if uplink data exists in the terminal's uplink HARQ buffer, the terminal may maintain the HARQ buffer without flushing the HARQ buffer. Afterwards, the terminal may resume the operation of transmitting uplink data in the uplink HARQ buffer at the start time of the communication service of the target satellite. Through this, uplink transmission can be maintained even in the case of satellite switching.

As described above, when the terminal performs satellite switching based on the unchanged PCI satellite switching scenario, since the terminal performs pre-compensation of an uplink TA for communication with the base station after provision of the communication service of the target satellite starts, based on the system information needed immediately after switching, a random access procedure to align the uplink TA may not be performed. However, as described above, the terminal may select a downlink beam used by the base station in the random access process for performing initial access, but since the random access procedure is not performed in the unchanged PCI satellite switching scenario, an operation for this may be necessary.

As an example, the terminal may need to change a transmission beam used for the downlink of the service link provided by the target satellite immediately after satellite switching. Here, since the terminal does not perform a random access procedure after satellite switching, a method for newly selecting a transmission beam used for the downlink of the service link immediately after satellite switching may be needed.

Specifically, the terminal may select a transmission beam used for the downlink of the service link immediately after switching using a mapping relationship between the beam used immediately before satellite switching and the downlink transmission beam used immediately after switching. As an example, the base station may recognize, before satellite switching, a mapping relationship between a transmission beam used for a specific terminal in the source satellite and a transmission beam used for the specific terminal in the target satellite. Then, when satellite switching is performed, the base station may change a downlink transmission beam of a service link for each terminal by using the mapping relationship.

As a more specific example, the terminal may be provided with the communication service through a downlink transmission beam with a beam index 1 from the source satellite. Afterwards, when the terminal may be provided with the communication service of the target terminal based on satellite switching, the communication service may be provided from the target satellite through a downlink transmission beam with a beam index of 2. The above-mentioned case may be the optimal beam selection. Here, the beam index 1 in the source satellite and the beam index 2 in the target satellite may have a mapping relationship. When the provision of the communication service of the source satellite ends and the provision of the communication service of the target satellite starts, the base station may select (change) the downlink transmission beam based on the above-described mapping relationship. In other words, when selecting a downlink transmission beam of the service link to use for a specific terminal, the base station may consider the mapping relationship based on a downlink transmission beam of the service link of the source satellite for the specific terminal to select a downlink transmission beam of the service link of the target satellite for the specific terminal.

As an example, the above-described mapping relationship may be determined in advance. As a specific example, the mapping relationship may be determined when planning quasi-Earth-fixed cells to which the unchanged PCI satellite switching scenario is applied, without being limited thereto. The base station or network may select a downlink transmission beam according to the mapping relationship based on the terminal's location information obtained from the terminal immediately before satellite switching of the terminal. As another example, the base station or network may select a downlink transmission beam according to a mapping relationship between the terminal's location information obtain from the terminal immediately before satellite switching and the terminal's location information obtained from the target satellite immediately after satellite switching.

As another example, the mapping relationship may be obtained from operational information obtained by the base station or network while serving the corresponding quasi-Earth-fixed cell, without being limited thereto. In addition, as an example, in the unchanged PCI satellite switching scenario, the terminal may receive an SSB of the service link provided by the target satellite after satellite switching. The terminal may acquire downlink synchronization through the received SSB, and estimate a downlink received signal strength (e.g. RSRP). If the estimated downlink received signal strength is equal to or less than a preset threshold, the terminal may perform an RRC connection re-establishment procedure, without being limited thereto. Here, the preset threshold may be a parameter configured by the base station and may be broadcast through system information, without being limited to thereto. As an example, the base station may configure a different threshold value for each of a plurality of terminals. Specifically, the base station may configure a threshold for each individual terminal through a parameter for threshold configuration included in RRC dedicated signaling, without being limited to a specific form.

As another example, a radio link failure (RLF) may occur after the terminal performs satellite switching. In other words, if the terminal recognizes an RLF in which the terminal is unable to communicate with the base station while using the service link provided by the target satellite after performing satellite switching based on the unchanged PCI satellite switching scenario, the terminal may perform an RRC connection re-establishment procedure.

As another example, the terminal may perform operations considering a time alignment timer (TAT) in the unchanged PCI satellite switching scenario. The TAT may be a timer provided by the base station to the terminal to manage uplink synchronization (e.g. uplink TA). Here, the terminal may be in an uplink timing aligned state while the timer is running. The TAT may be a timer for uplink synchronization valid time. The TAT may be set to have a different value for each terminal (i.e. UE-specific value) through a signal dedicated to each terminal. As another example, the TAT may be set through a SIB broadcast by the base station so that all terminals in the cell have the same value (i.e. cell-specific value), without being limited thereto. Here, the TAT may operate independently of satellite switching. As an example, the TAT may operate independently of the timer (e.g. T430 timer) that indicates validity of system information. In other words, the TAT may not be affected by the unchanged PCI satellite switching scenario and may operate in the same manner as before.

As another example, the terminal that supports the unchanged PCI satellite switching may report to the base station that it is a terminal that supports the unchanged PCI satellite switching. As a specific example, the terminal may report to the base station that the terminal supports the unchanged PCI satellite switching based on UE capability information. As an example, the terminal may generate a UE capability information message indicating that the terminal supports the unchanged PCI satellite switching. More specifically, the base station may transmit a UE capability inquiry message to the terminal, and in response, the terminal may report, to the base station, information indicating whether the unchanged PCI satellite switching is supported by including it in a UE capability information message, without being limited thereto.

As an example, the terminal may recognize that the unchanged PCI satellite switching scenario is supported if an SIB obtained through the service link of the source satellite includes the post-switching necessary SI. In other words, the terminal may recognize the scenario of satellite switching with re-synchronization, as described above. Here, the post-switching necessary SI may be a first field (or first parameter) in the SIB. As a specific example, the first field (or first parameter) may be a parameter for satellite switching with re-synchronization (*e.g. SatSwitchWithReSync*), without being limited thereto. Here, the terminal may recognize that the unchanged PCI satellite switching scenario is supported when it receives the SIB including the first field (or first parameter) through the service link of the source satellite. In addition, the SIB may further include other parameters related to the NTN system. As an example, the SIB may further include the parameter(s) included in Table 9, without being limited thereto. Here, the terminal may recognize that the unchanged PCI satellite switching scenario is supported based on the above-described first field (or first parameter) and other parameters related to the NTN system. As a specific example, the terminal may recognize the unchanged PCI satellite switching scenario based on the above-described first field (or first parameter) and the *t-service* field (or parameter) in Table 9, which are included in the SIB, and the *t-service* field represents the end time of the satellite's communication service, without being limited thereto.

As another example, the terminal may recognize that the PCI in the corresponding cell is not changed if the first field (or first parameter) is included in the SIB as the post-switching necessary SI. As a specific example, in the above-described unchanged PCI satellite switching scenario, hard satellite switching may be performed as the case where the PCI is not changed in the corresponding cell, without being limited thereto. In other words, if the first field (or first parameter) is included in the SIB as the post-switching necessary SI, the PCI may not be changed in the corresponding cell, and soft satellite switching may be performed. As an example, the above description is based on the case where hard satellite switching is performed in the unchanged PCI satellite switching scenario, but the same may be applied even when soft satellite switching is performed without changing the PCI.

In other words, in the NTN system, the operations for the case where the terminal obtains the post-switching necessary SI through the service link of the source satellite may be equally applied even when soft satellite switching is performed without changing the PCI, without being limited to a specific form. As another example, when the terminal receives the post-switching necessary SI through the service link of the source satellite, the terminal may perform pre-compensation of an uplink TA for the service link of the target satellite without a random access procedure, and may perform operations based on the pre-compensated TA and updates thereof, when the service link of the target satellite is established. As an example, if the terminal obtains random access indication information after receiving the post-switching necessary SI through the service link of the source satellite, the terminal may perform a random access procedure for the target satellite. In other words, the terminal may not perform a random access procedure if it receives the post-switching necessary SI through the service link of the source satellite. However, if the base station indicates that a random access procedure is required, the terminal may perform a random access procedure based on the indication, without being limited to the corresponding exemplary embodiment.

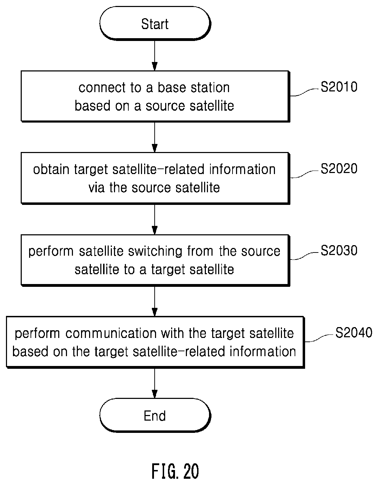

FIG. 20 is a flowchart illustrating a first exemplary embodiment of a terminal operation in a satellite switching method in a wireless communication system.

Referring to FIG. 20, a terminal operating in the NTN system may be connected to a base station through a service link of a source satellite (S2010). Here, the terminal may obtain target satellite-related information through the service link of the source satellite (S2020). As an example, the target satellite-related information may be the above-described post-switching necessary SI, without being limited thereto. Then, satellite switching may be performed from the source satellite to a target satellite (S2030), and after the satellite switching to the target satellite is performed, the terminal may perform communication with the target satellite based on the target satellite-related information (S2040).

Here, as an example, if the terminal does not receive random access indication information, the terminal may be connected to a service link of the target satellite based on the satellite switching without a random access procedure. In other words, when the terminal receives the post-switching necessary SI through the service link of the source satellite, the terminal may be connected to the target satellite without a random access procedure and may perform communication through the service link of the target satellite.

Here, the above-described operations may be performed based on the unchanged PCI satellite switching scenario. As an example, in the unchanged PCI method, the terminal may be connected to the base station based on a first cell provided by the source satellite. After the satellite switching, the terminal may be connected to the same base station based on a second cell provided by the target satellite. The first cell and the second cell may be quasi-Earth-fixed cells. Here, a PCI provided by the source satellite of the first cell and a PCI provided by the target satellite of the second cell may be the same. Additionally, a frequency of an SSB that the terminal receives from the source satellite based on the first cell and a frequency of an SSB that the terminal receives from the target satellite based on the second cell may be the same.

In addition, when the terminal is connected to the service link of the target satellite after a communication service of the source satellite is stopped based on satellite switching, the terminal may perform communication with the target satellite based the target satellite-related information after switching to the target satellite based on the satellite switching. As another example, the terminal may be connected to the service link of the target satellite before the communication service of the source satellite is stopped, and if the communication service of the source satellite is stopped after the service link of the target satellite is connected, the terminal may perform communication with the target satellite based the target satellite-related information after switching to the target satellite based on the satellite switching. In addition, the target satellite-related information obtained by the terminal may include post-switching application information of the target satellite, and the terminal may determine an uplink TA for the target satellite based on the post-switching application information of the target satellite, and apply the determined uplink TA to communication with the target satellite. Here, the post-switching application information of the target satellite, may be *NTN-config* itself or may include some fields in *NTN-config,* as described above. As an example, the post-switching application information of the target satellite may include at least one of *epochTime, TA-info, ephemerisInfo, ntn-UISyncValidityDuration, cellSpecificK_offset, Kmac, TA-Report, ntn-PolarizationDL,* or *ntn-PolarizationUL* in *NTN-config.* As another example, the post-switching application information of the target satellite may include at least one of *t-Service, t-Start,* or *t-Gap,* as described above.

In addition, the post-switching application information of the target satellite may be composed of at least one field or IE in the SIB that the terminal obtains through the service link of the source satellite. In other words, the post-switching application information of the target satellite may be independently configured within the SIB, as described above. In addition, the terminal may receive an NTN-related SIB, and the target satellite-related information may be included in the NTN-related SIB. As an example, if the first field is present in the NTN-related SIB, the terminal may determine that satellite switching is performed based on the scenario of satellite switching with re-synchronization. As another example, when the first field and the second field are present in the NTN-related SIB, the terminal may determine that satellite switching is performed based on the scenario of satellite switching with re-synchronization. Here, the first field may be *SatSwitchWithReSync,* and the second field may be the *t-service* field, without being limited thereto. In addition, if the first field is present in the NTN-related SIB, and a cell from which the terminal receives a service is a quasi-Earth-fixed cell, the terminal may determine that satellite switching is performed based on the scenario of satellite switching with re-synchronization. As an example, in the scenario of satellite switching with re-synchronization, the source satellite and the target satellite may be connected to the same base station, a PCI of the cell may be the same for the source satellite and the target satellite, and a frequency of SSB(s) received by the terminal based on the cell may be the same. In addition, if uplink data exists in an uplink HARQ buffer based on the service link of the source satellite, the terminal may maintain the uplink data in the HARQ buffer during the satellite switching process and resume an operation of transmitting the uplink data of the uplink HARQ buffer after switching to the target satellite.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a terminal, comprising:

   obtaining target satellite-related information from a source satellite;
   performing satellite switching from the source satellite to a target satellite based on the target satellite-related information; and
   performing communication with the target satellite based on the target satellite-related information after performing the satellite switching.

2. The method according to claim 1, wherein the performing of communication with the target satellite comprises:

   connecting to the target satellite without a random access procedure based on the target satellite-related information; and
   performing communication with the target satellite based on the target satellite-related information.

3. The method according to claim 1, wherein the source satellite and the target satellite are connected to a same base station, the source satellite forms a first quasi-Earth-fixed cell and the target satellite forms a second quasi-Earth-fixed cell, a physical cell identifier (PCI) of the first quasi-Earth-fixed cell is the same as a PCI of the second quasi-Earth-fixed cell, and a frequency of a first synchronization signal block (SSB) transmitted by the source satellite is the same as a frequency of a second SSB transmitted by the target satellite.

4. The method according to claim 1, wherein the performing of communication with the target satellite comprises:

   stopping a communication service with the source satellite based on the satellite switching;
   connecting to the target satellite based on the target satellite-related information; and
   performing communication with the target satellite through a service link of the target satellite based on the target satellite-related information.

5. The method according to claim 1, wherein the performing of communication with the target satellite comprises:

   connecting to the target satellite based on the target satellite-related information;

stopping communication on a service link of the source satellite after connecting to the target satellite; and performing communication with the target satellite through a service link of the target satellite based on the target satellite-related information.

6. The method according to claim 1, wherein the terminal determines an uplink timing advance (TA) for the target satellite based on the target satellite-related information, and applies the determined uplink TA to the communication with the target satellite.

7. The method according to claim 1, wherein the target satellite-related information includes at least one of an epoch time, uplink TA information, ephemeris information, uplink synchronization validity duration, cell-specific scheduling offset, network scheduling offset, TA report information, downlink polarization information, or uplink polarization information within non-terrestrial network configuration information for the target satellite.

8. The method according to claim 1,

wherein the target satellite-related information includes a time at which provision of a communication service of the source satellite is stopped, and
wherein when provision of the communication service is stopped at the time, the terminal maintains an uplink hybrid automatic repeat request (HARQ) buffer without flushing the uplink HARQ buffer, and when the performing of communication with the target satellite starts, the terminal resumes an uplink HARQ operation with the target satellite.

9. The method according to claim 1, wherein the target satellite-related information is included in a system information block (SIB) that the terminal obtains from the source satellite.

10. The method according to claim 1, wherein when the target satellite-related information is included in a non-terrestrial network-related SIB, the terminal performs the satellite switching, and when the target satellite-related information is not included in the non-terrestrial network-related SIB, the terminal does not perform the satellite switching.

11. A method of a base station, comprising:

providing target satellite-related information to a terminal via a source satellite connected to the base station;
performing satellite switching from the source satellite to a target satellite at a time at which provision of a communication service of the source satellite is stopped; and
providing a communication service to the terminal via the target satellite after performing the satellite switching, wherein the base station provides the communication service to the terminal via the target satellite without performing a random access procedure between the target satellite and the terminal.

12. The method according to claim 11, wherein the target satellite-related information is included in a system information block (SIB) transmitted to the terminal.

13. The method according to claim 11, wherein the target satellite-related information includes at least one of an epoch time, uplink TA information, ephemeris information, uplink synchronization validity duration, cell-specific scheduling offset, network scheduling offset, TA report information, downlink polarization information, or uplink polarization information within non-terrestrial network configuration information for the target satellite.

14. The method according to claim 11, wherein the base station includes the target satellite-related information in a non-terrestrial network-related SIB to instruct the terminal to perform the satellite switching, and the base station does not include the target satellite-related information in the non-terrestrial network-related SIB to instruct the terminal not to perform the satellite switching.

15. A terminal comprising a processor, wherein the processor causes the terminal to perform:

obtaining target satellite-related information from a source satellite;
performing satellite switching from the source satellite to a target satellite based on the target satellite-related information; and
performing communication with the target satellite based on the target satellite-related information after performing the satellite switching.

16. The terminal according to claim 15, wherein in the performing of communication with the target satellite, the processor causes the terminal to perform:

connecting to the target satellite without a random access procedure based on the target satellite-related information; and
performing communication with the target satellite based on the target satellite-related information.

17. The terminal according to claim 15, wherein in the performing of communication with the target satellite, the processor causes the terminal to perform:

stopping a communication service with the source satellite based on the satellite switching;
connecting to the target satellite based on the target satellite-related information; and
performing communication with the target satellite through a service link of the target satellite based on the target satellite-related information.

18. The terminal according to claim 15,

wherein the target satellite-related information includes a time at which provision of a communication service of the source satellite is stopped, and
wherein when provision of the communication service is stopped at the time, the processor causes the terminal to maintain an uplink hybrid automatic repeat request (HARQ) buffer without flushing the uplink HARQ buffer, and when the performing of communication with the target satellite starts, the processor causes the terminal to resumes an uplink HARQ operation with the target satellite.

19. The terminal according to claim 15, wherein the target satellite-related information is included in a system information block (SIB) that the terminal obtains from the source satellite.

20. The terminal according to claim 15, wherein when the target satellite-related information is included in a non-terrestrial network-related SIB, the processor causes the terminal to perform the satellite switching, and when the target satellite-related information is not included in the non-terrestrial network-related SIB, the processor causes the terminal not to perform the satellite switching.

FIG. 1

200

220

210

memory

| ROM | RAM |

processor

input interface device ~240

output interface device ~250

270

storage device ~260

transceiver ~230

FIG. 2

300

L3    radio resource control (RRC) layer    —310

logical channel

315

L2    medium access control (MAC) layer    —320

transport channel

325

L1    physical (PHY) layer    —330

control/measurement

350

FIG. 3

<u>400</u>

frame

slot

410

#0 · · · #(N$_{slot}^{subframe,\mu}$−1) · · · #(N$_{slot}^{frame,\mu}$−1)

430

420

subframe

# FIG. 4

downlink frame #i ⎯500

uplink frame #i ⎯510

⎯520

T$_{TA}$

# FIG. 5

FIG. 6

<u>700</u>

SS burst set periodicity (20ms) ——710

SS burst set (half frame) ——715

SS burst ——720

730

SSB #1

SSB #2

740

1 slot — SSB #3  SSB #4

750  760

239

4 RBs

PBCH

192

182

20 RBs | 12 RBs

127 subcarriers

PSS | PBCH | SSS | PBCH

56

47

4 RBs

PBCH

0

subcarrier

OFDM symbol

**FIG. 7**

FIG. 8

FIG. 9

: quasi-Earth-fixed cell

: terminal

FIG. 10

○ : quasi-Earth-fixed cell ◯ : geographic area where no service link is available

🮀 : terminal

1120

1110

1130

1140

←<before switching>→ ←<during switching>→ ←<after switching>→

1150

FIG. 11

: quasi-Earth-fixed cell    : geographic area where no service link is available

: terminal

1210    1220

1230    1240

<before switching>    <during switching>    <after switching>

FIG. 12

1350
1360
1310
1320
1330
1370
1340

◯ : quasi-Earth-fixed cells
using the same PCI and SSB frequency

▯ : terminal

FIG. 13

FIG. 14

FIG. 15

1610

SIBn

... 1611

indicator

...

1613 — neighboring cell #2 information

neighboring cell #1 information

1612 —

neighboring cell list

FIG. 16

1710

1720

SIBk  1711

SIBn

...

...

indicator

1722 neighboring cell #2 information

neighboring cell list

1721 neighboring cell #1 information

FIG. 17

1810

SIBn

   ...    1811

system information needed
for UE immediately after switching

   ...

FIG. 18

provision of
service link of
source satellite ends

provision of
service link of
target satellite starts

provision of service link of source satellite          provision of service link of target satellite

time

time required for
satellite switching

1910

FIG. 19

```
                          ┌─────────────────┐
                          │      Start       │
                          └─────────────────┘
                                   │
                                   ▼
        ┌─────────────────────────────────────┐
        │         connect to a base station    │ ──S2010
        │         based on a source satellite   │
        └─────────────────────────────────────┘
                                   │
                                   ▼
        ┌─────────────────────────────────────┐
        │  obtain target satellite-related information │ ──S2020
        │          via the source satellite     │
        └─────────────────────────────────────┘
                                   │
                                   ▼
        ┌─────────────────────────────────────┐
        │  perform satellite switching from the source │ ──S2030
        │        satellite to a target satellite │
        └─────────────────────────────────────┘
                                   │
                                   ▼
        ┌─────────────────────────────────────┐
        │ perform communication with the target satellite │ ──S2040
        │ based on the target satellite-related information │
        └─────────────────────────────────────┘
                                   │
                                   ▼
                          ┌─────────────────┐
                          │       End        │
                          └─────────────────┘
```

FIG. 20

EP 4 761 365 A1

## INTERNATIONAL SEARCH REPORT

International application No.

**PCT/KR2024/011675**

### A. CLASSIFICATION OF SUBJECT MATTER

**H04W 36/08**(2009.01)i; **H04W 36/00**(2009.01)i; **H04W 36/02**(2009.01)i; **H04W 84/06**(2009.01)i; **H04J 11/00**(2006.01)i; **H04W 56/00**(2009.01)i

According to International Patent Classification (IPC) or to both national classification and IPC

### B. FIELDS SEARCHED

Minimum documentation searched (classification system followed by classification symbols)

H04W 36/08(2009.01); H04B 7/185(2006.01); H04W 36/00(2009.01); H04W 56/00(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: satellite, NTN(non-terrestrial network), switch, handover, source, target, system information, fixed cell, PCI(physical cell identifier), SSB(synchronization signal block), service interruption, timing advance(TA), buffer

### C. DOCUMENTS CONSIDERED TO BE RELEVANT

| Category* | Citation of document, with indication, where appropriate, of the relevant passages | Relevant to claim No. |
|---|---|---|
| X | US 2021-0136641 A1 (MEDIATEK SINGAPORE PTE. LTD.) 06 May 2021 (2021-05-06)<br>See paragraphs [0030]-[0042]; claim 1; and figures 4-7. | 1-2,4-7,15-17 |
| Y | | 3,9-14,19-20 |
| A | | 8,18 |
| Y | KR 10-2020-0067091 A (ELECTRONICS AND TELECOMMUNICATIONS RESEARCH INSTITUTE) 11 June 2020 (2020-06-11)<br>See paragraphs [0044]-[0063]; and figures 5-6. | 3,9-14,19-20 |
| A | KR 10-2022-0137420 A (INNOVATIVE TECHNOLOGY LAB CO., LTD.) 12 October 2022 (2022-10-12)<br>See paragraphs [0199]-[0291]; and figures 14-35. | 1-20 |

✓ Further documents are listed in the continuation of Box C.　　✓ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2024** | **09 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

53

**INTERNATIONAL SEARCH REPORT**

| International application No. |
| --- |
| **PCT/KR2024/011675** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2022-0004044 A (HUAWEI TECHNOLOGIES CO., LTD.) 11 January 2022 (2022-01-11) See paragraphs [0034]-[0062]; and figures 3-4. | 1-20 |
| A | US 2022-0046498 A1 (FG INNOVATION COMPANY LIMITED) 10 February 2022 (2022-02-10) See paragraphs [0065]-[0196]; and figures 3-18. | 1-20 |

Form PCT/ISA/210 (second sheet) (July 2022)

## INTERNATIONAL SEARCH REPORT
### Information on patent family members

International application No.

**PCT/KR2024/011675**

| Patent document cited in search report | | | Publication date (day/month/year) | Patent family member(s) | | | Publication date (day/month/year) |
|---|---|---|---|---|---|---|---|
| US | 2021-0136641 | A1 | 06 May 2021 | CN | 112788683 | A | 11 May 2021 |
| KR | 10-2020-0067091 | A | 11 June 2020 | KR | 10-2720204 | B1 | 21 October 2024 |
| KR | 10-2022-0137420 | A | 12 October 2022 | WO | 2022-211426 | A1 | 06 October 2022 |
| KR | 10-2022-0004044 | A | 11 January 2022 | CN | 111756454 | A | 09 October 2020 |
| | | | | CN | 111756454 | B | 03 December 2021 |
| | | | | CN | 114268387 | A | 01 April 2022 |
| | | | | CN | 114268387 | B | 11 June 2024 |
| | | | | EP | 3937400 | A1 | 12 January 2022 |
| | | | | EP | 3937400 | A4 | 20 April 2022 |
| | | | | EP | 3937400 | B1 | 10 July 2024 |
| | | | | KR | 10-2535478 | B1 | 26 May 2023 |
| | | | | US | 2022-0217607 | A1 | 07 July 2022 |
| | | | | WO | 2020-192416 | A1 | 01 October 2020 |
| US | 2022-0046498 | A1 | 10 February 2022 | US | 11895546 | B2 | 06 February 2024 |
| | | | | US | 2024-0163751 | A1 | 16 May 2024 |
| | | | | WO | 2022-028620 | A1 | 10 February 2022 |

Form PCT/ISA/210 (patent family annex) (July 2022)